# NEUE EUROPÄISCHE PATENTSCHRIFT

(11) **EP 0 310 914 B2**
(45) Veröffentlichungstag und Bekanntmachung des Hinweises auf die Entscheidung über den Einspruch: **10.01.2001**
(45) Hinweis auf die Patenterteilung: 18.01.1995
(21) Anmeldenummer: 88115870.3
(22) Anmeldetag: 27.09.1988
(51) Int. Cl.: B29C 45/77, B29C 45/57, B29C 45/16

(54) **Verfahren zum Spritzgiessen von Formteilen aus thermoplastischen Kunststoffen sowie Vorrichtung zur Durchführung des Verfahrens**
Method of injection moulding formed parts of thermoplastic resins, and for carrying out this method
Procédé pour mouler par injection des pièces en matière synthétique thermoplastique ainsi que dispositif pour la réalisation du procédé

(30) Priorität: 09.10.1987 DE 3734164
(43) Veröffentlichungstag der Anmeldung: 12.04.1989
(73) Patentinhaber: Battenfeld GmbH, D-58540 Meinerzhagen (DE)
(72) Erfinder: Eckardt, Helmut, Dipl.-Ing., D-5882 Meinerzhagen (DE); Ehritt, Jürgen, D-5912 Hilchenbach-Müsen (DE)
(74) Vertreter: Valentin, Ekkehard, Dipl.-Ing.

(56) Entgegenhaltungen:
- EP-A- 0 127 961
- DE-A- 2 346 135
- US-A- 4 101 617
- US-A- 4 120 924
- US-A- 4 601 870
- US-A- 4 685 881

## Beschreibung

Die Erfindung betrifft ein Verfahren zum Spritzgießen von Formteilen aus thermoplastischen Kunststoffen,
- bei welchem zunächst eine zur Ausbildung des Formteiles ausreichende Menge des schmelzflüssigen Kunststoffs in die Spritzform gedrückt wird,
- bei welchem dann in die Spritzform und/oder den thermoplastischen Kunststoff ein strömungsfähiges Medium, insbesondere Gas mit einem Druck eingepreßt wird, der die Kunststoffmasse gleichmäßig über die Oberfläche des Formhohlraums unter Bildung eines Hohlkörpers verteilt,
- bei welchem weiterhin der unter Mediendruck gehaltene Hohlkörper in der Spritzform abgekühlt wird,
- und bei welchem schließlich der Mediendruck aus dem Hohlkörper abgelassen und dann das Formteil entformt sowie aus der Spritzform entnommen wird,
- wobei das strömungsfähige Medium aus einem mindestens auf einem vorgebenen Mindestdruck gehaltenen Druckspeicher in die Spritzform eingeleitet und oder auf die über die Oberfläche des Formhohlraums verteilte Kunststoffmasse zur Einwirkung gebracht wird,
- wobei der Druck dieses strömungsfähigen Mediums im Formhohlraum unabhängig vom herrschenden Druck im Druckspeicher bis zur Abkühlung der Kunststoffmasse zumindest zeitweilig kontrolliert und oder variiert,
- währenddessen aber gegen Rückströmung aus dem Formhohlraum gesperrt wird.

Gegenstand der Erfindung ist darüber hinaus aber auch noch eine Vorrichtung zum Spritzgießen von Formteilen aus thermoplastischen Kunststoffen,
- bei der an den Spritzkopf bzw. das Düsenmundstück am vorderen Ende des Gehäuses eines Schneckenextruders eine den Formhohlraum für Bildung des Formteils enthaltende Spritzform anlegbar ist,
- bei der der Formhohlraum dieser Spritzform durch den Spritzkopf bzw. das Düsenmundstück aus dem Schneckenextruder mit Kunststoffschmelze bestückbar ist,
- bei der die Überführung der Kunststoffschmelze durch den Spritzkopf bzw. das Düsenmundstück in die Spritzform z. B. durch eine im Gehäuse des Schneckenextruders über einen Verschiebeantrieb gegenüber dem Düsenmundstück verstellbare Schließnadel beeinflußbar ist,
- bei der der Formhohlraum in der Spritzform über Leitungen mit einem Druckspeicher für ein strömungsfähiges Medium verbindbar ist,
- bei der in dem vom Druckspeicher zur Spritzform führenden Leitungen Steuerelemente und/oder Regelelemente für das strömungsfähige Medium vorgesehen sind,
- und bei der in diesen Leitungen dem Formhohlraum der Spritzform eine Rückstromsperre für das strömungsfähige Medium vorgeordnet ist.

Durch EP-A-0127 961 sind bereits ein Verfahren zum Spritzgießen von Formteilen aus thermoplastischen Kunststoffen sowie eine Vorrichtung zur Durchführung dieses Verfahrens bekannt, welche auf eine Volumenkontrolle des in die Kunststoffschmelze eingebrachten fluidischen Mediums basieren, wobei dieses mit einer überwachten Geschwindigkeit in die Kunststoffschmelze eingespritzt wird.

Das Problem dieses mit Volumenkontrolle für das fluidische Medium arbeitenden bekannten Verfahrens liegt grundsätzlich darin, daß der Druck nur über die Vorlaufgeschwindigkeit eines Kolbens in einem Zylinder geregelt werden kann. Dabei ist eine Druckregelung nur so lange möglich, bis der Kolben in seiner vorderen Endlage angelangt ist. Hiernach kann aber keine Druckregelung mehr stattfinden, weil nämlich Leckagen zwischen dem Kolben und dem Zylinder unvermeidbar sind und hieraus dann zwangsläufig ein Druckabfall resultiert.

Eine Druckkontrolle des innerhalb der Spritzform befindlichen bzw. auf die über die Oberfläche des Formhohlraums verteilte Kunststoffschmelze einwirkenden fluidischen Mediums ist hierbei jedoch nicht erreichbar.

Nach diesem Stand der Technik kann zwar der Füllvorgang der Spritzform so beeinflußt werden, daß sich in dieser der gewünschte Hohlkörper ausbildet, sowie auch während der Thermoplastizität des Kunststoffes durch den Gasdruck in seiner Form fixiert wird. Es hat sich jedoch gezeigt, daß Struktur und/oder Dichte der Wandungen bei nach diesem bekannten Verfahren hergestellten Kunststoff-Hohlkörpern nicht immer in optimaler Weise ausfallen und daher die Brauchbarkeit der fertigen Formteile für den jeweiligen Einsatzzweck mehr oder weniger beeinträchtigt werden kann.

Die Erfindung hat daher zum Ziel, ein Verfahren und eine Vorrichtung der gattungsgemäßen Art zum Spritzgießen von Formteilen aus thermoplastischen Kunststoffen anzugeben, durch welches bzw. mit welcher Struktur und Dichte des die Formteil-Wandungen bildenden Kunststoffmaterials während der Durchführung des Spritzvorgangs entsprechend den unterschiedlichen Bedürfnissen beeinflußt werden können. In verfahrenstechnischer Hinsicht wird diese Aufgabe durch die Merkmale des Anspruchs 1 gelöst.

Die Kontrolle des Mediendrucks ist auch dann wichtig, wenn nur mit einem ganz bestimmten Druckniveau gearbeitet werden soll, eine Druckvanation also nicht erwünscht oder nicht beabsichtigt ist.

Es kann erfindungsgemäß bspw. auch vorteilhaft sein, den Spritzvorgang mit einem relativ niedrigen Mediendruck zu beginnen, diesen dann zu steigern und später wieder auf einen geringeren Wert abzusenken, bspw. in der Gestalt, daß der Enddruck etwa dem Atmosphärendruck entspricht.

Es ist möglich, den Mediendruck nur zeitabhängig zu regeln undioder zu steuern. Ebenso kann aber auch nur wegabhängig geregelt und/oder gesteuert werden.

Vielfach ist es aber besonders vorteilhaft, wenn der Mediendruck zeit- und wegabhängig geregelt und/oder gesteuert wird. Eine temperaturabhängig, bspw. über die Temperatur der im Formhohlraum der Spritzform befindlichen Kunststoffmasse stattfindende Regelung und/oder Steuerung des Mediendruckes ist aber ebenso möglich wie in Abhängigkeit vom Innendruck im Formhohlraum der Spritzform.

Des weiteren besteht die Möglichkeit, den Mediendruck entweder allmählich an- und abschwellend zu regeln und/oder zu steuern oder aber ihn jeweils plötzlich bzw. stufenweise zu verändern.

Eine gattungsgemäße Vorrichtung zum Spritzgießen von Formteilen aus thermoplastischen Kunststoffen weist erfindungsgemäß die Merkmale des Anspruchs 9 auf.

Die als Steuer- und oder Regelelement vorgesehenen Druckventile können dabei entweder als Druckbegrenzungsventile ausgeführt oder aber als Druckregelventile ausgelegt werden.

Erfindungsgemäß ergibt sich die vorteilhafte Möglichkeit, als Steuer- und/oder Regelelemente mehrere parallel geschaltete Druckventile vorzusehen, die unabhängig voneinander einstellbar und ansteuerbar, aber mit dem Formhohlraum der gleichen Spritzform verbindbar sind.

Möglich ist es aber auch, mehrere Gruppen parallel geschalteter Druckventile zu benutzen, die mit den Formhohlräumen verschiedener Spritzformen in Verbindung stehen, aber unabhängig voneinander einstellbar und ansteuerbar sind.

Es ist nach der Erfindung auch die Möglichkeit vorgesehen, daß der Druckspeicher über den Spritzkopf des Schneckenextruders bzw. der Spritzgießmaschine an den Formhohlraum der Spritzform angeschlossen werden kann.

Ein derartiger Lösungsweg sieht dabei vor,
- daß der Spritzkopf je einen Zuführkanal für die Kunststoffschmelze und das strömungsfähige Medium enthält, die einem in eine Austrittsöffnung übergehenden Hauptkanal zugeordnet sind,
- daß die Zuführkanäle mit axialem Abstand von der Austrittsöffnung und voneinander sowie gegeneinander winkelversetzt in den Hauptkanal münden,
- daß eine axial im Hauptkanal verschiebbare Schließnadel vorgesehen ist, mit der die beiden Zuführkanäle vom Hauptkanal abtrennbar sind,
- daß in der Schließnadel einem wesentlich in axialer Richtung verlaufender Verbindungskanal angeordnet ist, der einerseits von der Stirnfläche aus radial zum entfernteren Zuführkanal hin aus dem Umfang der Schließnadel herausgeführt ist,
- und daß die radiale Umfangsöffnung des Verbindungskanals sowohl in der angeschlossenen axialen Stellung als auch in zumindest einer teilweise geöffneten axialen Stellung der Schließnadel etwa auf gleicher Höhe mit der inneren radialen Austrittsöffnung des entfernteren Zuführkanals liegt.

Ein anderer Lösungsweg ist hingegen dadurch gekennzeichnet,
- daß im Spritzkopf einerseits durch einen im Gehäuse axial verschiebbar geführten rohrförmigen Einsatz eine innere Düse für ein erstes Kunststoffmatenal gebildet ist, die wiederum eine ebenfalls axiale verschiebbare Nadel als Schließvorrichtung enthält,
- daß durch einen Ringraum zwischen dem rohrförmigen Einsatz und dem Gehäuse eine Ringdüse für das zweite Kunststoffmaterial gebildet ist, zu der der axial verschiebbare, rohrförmige Einsatz die Schließvorrichtung bildet,
- daß die Schließnadel an ihrem freien Ende einen Ansatz hat, der in der Schließstellung der inneren Düse zumindest bündig mit dem freien Ende des rohrförmigen Einsatzes abschließt,
- daß die Schließnadel an ihrem freien Ende eine zentrale Düsenöffnung enthält, an die sich nach rückwärts ein Verbindungskanal anschließt, der eine radiale Umfangsöffnung hat,
- daß in der Wandung des rohrförmigen Einsatzes ein längs verlaufender Verbindungskanal ausgebildet ist, der am Innenumfang des rohrförmigen Einsatzes radial ausmündet,
- und daß die radiale Umfangsöffnung des Verbindungskanals der Schließnadel mit der radialen Ausmündung des Verbindungskanals im rohrförmigen Einsatz mindestens in der der Schließstellung entsprechenden Axialstellung der Schließnadel durch Relativdrehung um die gemeinsame Längsachse wahlweise in und außer Strömungsverbindung mit der Zuführleitung für das strömungsfähige Medium, insbesondere das Druckgas, stellbar ist.

Weitere Merkmale und Vorteile der Erfindung werden nachfolgend an in der Zeichnung dargestellten Ausführungsbeispielen näher erläutert. Es zeigen
- Figur 1: in schematisch vereinfachter Darstellung eine Steuerungs- und Regelvorrichtung für den Druck eines in den Formhohlraum einer mit dem Spritzkopf einer Spritzgießmaschine in Verbindung stehenden Spritzform zur Herstellung von Formteilen aus thermoplastischen Kunststoffen,
- Figur 2: ebenfalls in schematisch vereinfachter Darstellung eine Steuerungs- und Regelvorrichtung für den Druck eines strömungsfähigen Mediums im Formhohlraum einer Spritzform, die zusätzlich mit einer Mengen-Dosiervorrichtung für das strömungsfähige Medium ausgestattet ist,
- Figur 3: in einer der Fig. 1 ähnlichen Darstellung eine Steuerungs- und Regelvorrichtung, welche für die gleichzeitige Zusammenarbeit mit mehreren Spritzgießmaschinen ausgelegt ist,
- Figur 4: eine der Fig. 3 entsprechende Steuerungs- und Regelvorrichtung, jedoch in einer etwas abgewandelten Ausführung, die
- Fig. 5.1 - 5.6: jeweils im Längsschnitt verschiedene Funktionsstellungen des Spritzkopfes einer Spritzgießmaschine, mit dessen Hilfe eine Spritzform mit einer Kunststoffkomponente und einem strömungsfähigen Druck-Medium beschickbar ist, und die
- Fig. 6.1 - 6.5: verschiedene Funktionsstellungen des Spritzkopfes einer Spritzgießmascnine, mit dessen Hilfe eine Spritzform mit zwei Kunststoffkomponenten und einem Druckmedium beaufschlagbar ist.

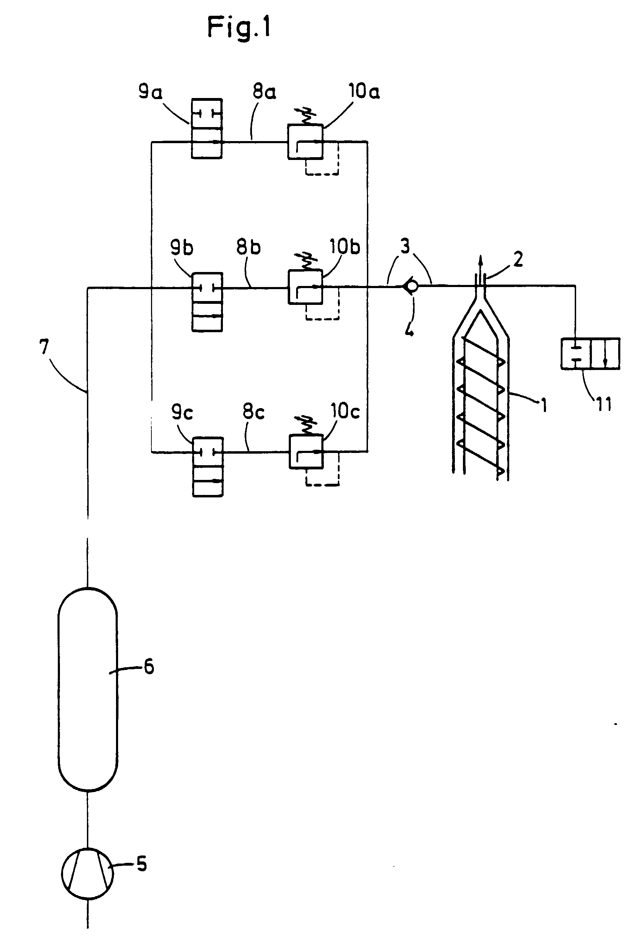

In Fig. 1 der Zeichnung ist der Schneckenextruder 1 einer Spritzgießmaschine gezeigt, dessen Gehäuse an seinem voroeren Ende den Spritzkopf 2 trägt, mit dem ein Spritzwerkzeug zur Herstellung von Kunststoff-Formteilen verbindbar ist.

Der mit Hilfe des Schneckenextruders 1 plastifizierte Kunststoff wird durch den Spritzkopf 2 in jeweils zur Ausbildung der Formteile ausreichenden Mengen in die Spritzform gedrückt. Dabei ist es oft erwünscht oder sogar Bedingung, daß die Formteile aus thermoplastischem Kunststoff als Hohlkörper gefertigt werden, indem nämlich die thermoplastische Kunststoffmasse gleichmäßig über die Oberfläche des Formhohlraums verteilt und dann in diesem abgekühlt wird. Durch Öffnen der Spritzform wird dann das abgekühlte Formteil freigelegt und kann anschließend entnommen werden.

Damit nach dem Einbringen der thermoplastischen Kunststoffmasse in die Spritzform deren gleichmäßige Verteilung über die Oberfläche des Formhohlraumes herbeigeführt wird, ist es notwendig, in den Formhohlraum der Spritzform zusätzlich ein strömungsfähiges Medium in solcher Menge und unter solchem Druck einzuführen, daß der vollständige Ablauf des Füllvorgangs der Form gewährleistet ist. Als strömungsfähiges Medium wird vorzugsweise Druckgas, bspw. Luft, Kohlensäure oder auch Stickstoff eingesetzt. Dabei ist es möglich, dieses strömungsfähige Medium in unmittelbarem Anschluß an das Einspritzen der thermoplastischen Kunststoffmasse in den Formhohlraum einzuführen. Vorzugsweise wird jedoch so vorgegangen, daß sich die Endphase des Einspritzens der Kunststoffmasse und die Anfangsphase für das Einführen des strömungsfähigen Mediums noch zeitweilig überlappen. Auf diese Art und Weise wird erreicht, daß sich die Fließfront-Geschwindigkeit der thermoplastischen Kunststoffmasse nicht verändert und diese damit einwandfrei und gleichmäßig zur Oberfläche des Formhohlraums in der Spritzform transportiert wird.

Wie in Fig. 1 angedeutet ist, findet die Zufuhr des unter Druck stehenden bzw. unter Druck zu setzenden, strömungsfähigen Mediums, insbesondere eines Gases, durch eine Leitung 3 in den Spritzkopf 2 statt. In dieser Leitung 3 befindet sich dabei vorzugsweise ein Sperrventil 4, welches eine Rückströmung des strömungsfähigen Mediums, vornehmlich des Gases, aus dem Spritzkopf 2 verhindert.

Ein Verdichter 5 fördert das Gas in einen Druckspeicher 6, und zwar in der Weise, daß dieser Druckspeicher 6 immer unter einem vorgegebenen Mindestdruck gehalten wird.

Anstelle eines von einem Verdichter 5 her versorgten Druckspeichers 6 kann natürlich ohne weiteres auch eine Druckflasche zum Einsatz gelangen.

Vom Druckspeicher 6 oder einer an dessen Stelle tretenden Druckflasche wird das Gas unter einem vorgegebenen Mindestdruck in eine Leitung 7 eingespeist, die bedarfsweise mit der zum Spritzkopf 2 führenden Leitung 3 verbunden oder von dieser getrennt werden kann.

Nach Fig. 1 der Zeichnung kann dabei die Leitung 7 wahlweise über einen von drei verschiedenen Strömungswegen 8a, 8b und 8c mit der Leitung 3 in Verbindung gebracht werden. In jeden dieser drei Strömungswege 8a bis 8c ist zu diesem Zweck ein Zwei-Wegeventil 9a, 9b, 9c eingeschaltet und hinter jedem dieser Zwei-Wegeventile 9a bis 9c ist in den Strömungsweg 8a bis 8c zusätzlich noch ein einstellbares Ventil 10a, 10b, 10c eingebaut.

Jedes Druckventil 10a bis 10c kann dabei als Druckbegrenzungsventil oder als Druckregelventil ausgebildet sein. Dabei ist es zweckmäßig jedes einzelne Druckventil 10a bis 10c selektiv einstellbar auszubilden und an ihnen die Einstellung unterschiedlicher Druckniveaus vorzunehmen. Diese Einstellung läßt sich dabei nicht nur als Direktverstellung, sondern auch als Fernverstellung vornehmen.

Im Falle der Benutzung einer Fernverstellung kann der in Fig. 1 dargestellte Schaltungsaufbau gegebenenfalls auch wesentlich vereinfacht werden, sofern dort als Druckventil ein verstellbares Druckregelventil zum Einsatz gelangt. In einem solchen Falle kommt man nämlich mit nur einem einzigen Zwei-Wegeventil und ebenfalls nur einem einzigen Druckregelventil aus.

Nach Fig. 1 der Zeichnung kann das vom Druckspeicher 6 oder der diesem entsprechenden Druckflasche kommende Druckgas dem Spritzkopf 2 des Schneckenextruders und damit auch der an diesen angeschlossenen Spritzform mit drei verschiedenen Druckstufen zugeführt werden, deren jede durch ein eigenes Druckventil 10a, 10b, 10c bestimmt ist.

Nach Fig. 1 ist bspw. das Zwei-Wegeventil 9a geöffnet, während die beiden Zwei-Wegeventile 9b und 9c jeweils geschlossen sind. Das Druckgas gelangt damit über den Strömungsweg 8a und das Druckventil 10a zur Leitung 3 und tritt durch Öffnen des Sperrventils 4 in den Spritzkopf 2 mit einem Druck ein, welcher durch die Einstellung des Druckventils 10 bestimmt ist.

Zweckmäßigerweise ist die Fernbetätigung für die Zwei-Wegeventile 9a, 9b und 9c so ausgelegt, daß sich immer nur eines derselben in Öffnungsstellung befinden kann, während jeweils die beiden anderen in ihrer Sperrstellung blockiert sind. Im Falle der Fig. 1 befinden sich demnach die beiden Zwei-Wegeventile 9b und 9c in ihrer Sperrstellung. Soll eines der beiden in Sperrstellung befindlichen Zwei-Wegeventile geöffnet werden, muß zuvor auch das bisher in seiner Öffnungsstellung befindliche Zwei-Wegeventil - hier also das Zwei-Wegeventil 9a - in die Sperrstellung gebracht werden.

Es sei unterstellt, daß das Druckventil 10a auf das niedrigste vorkommende Druckniveau eingestellt, das Druckventil 10b die Einstellung für das höchste vorkommende Druckniveau hat und das Druckventil 10c dem mittleren Druckniveau zugeordnet ist.

Wird dabei weiterhin angenommen, daß die Zwei-Wegeventile 9a, 9b und 9c jeweils nacheinander aus ihrer Geschlossenstellung in ihre Offenstellung und wieder in ihre Geschlossenstellung gebracht werden, während mit dem Schneckenextruder 1 bzw. dessen Spritzkopf 2 ein Spritzvorgang im (nicht gezeigten) Spritzwerkzeug stattfindet, dann ergibt sich folgende Wirkungsweise:
Die vom Schneckenextruder 1 durch den Spritzkopf 2 in die Spritzform eingebrachte Dosiermenge der thermoplastischen Kunststoffmasse wird durch Öffnen des Zwei-Wegeventiles 9a zunächst mit dem Gas auf dem niedrigsten vorkommenden Druckniveau beaufschlagt und mit dessen Hilfe gleichmäßig über die Oberfläche des Formhohlraums in der Spritzform verteilt. Wird dann das Zwei-Wegeventil 9a aus der Öffnungsstellung in die Schließstellung gebracht, dann wird über das Sperrventil 4 der im Formhohlraum anstehende Gasdruck aufrechterhalten. Wird nunmehr das Zwei-Wegeventil 9b aus seiner Schließstellung in die Öffnungsstellung bewegt, dann kommt das Druckgas über das am Druckventil 10b eingestellte höchste Druckniveau zur Wirkung. Es öffnet dabei das Sperrventil 4 und beaufschlagt den Formhohlraum in der Spritzform. Nunmehr kann das Zwei-Wegeventil 9b aus seiner Öffnungsstellung wieder in seine Schließstellung zurückbewegt werden, wobei über das Sperrventil das über das Druckventil 10b vorgegebene Druckniveau innerhalb des Formhohlraums aufrechterhalten wird. Nach einer gewissen Verweilzeit des höchsten Druckniveaus wird ein normalerweise in Schließstellung befindliches ZweiWegeventil 11 kurzzeitig in die Öffnungsstellung bewegt, so daß das höchste Niveau des im Formhohlraum und im Spritzkopf 2 anstehenden Gasdrucks in die Atmosphäre abgebaut wird. Nunmehr kann durch Öffnen des Zwei-Wegeventils 9c über das Druckventil 10c dem Spritzkopf 2 und damit dem Formhohlraum das Gas mit mittlerem Druckniveau aufgeschaltet werden. Da auch in diesem Falle das Sperrventil 4 wieder zur Wirkung kommt, kann das Zwei-Wegeventil 9c aus seiner Offenstellung wieder in die Absperrstellung zurückbewegt werden.

Zur Entlastung des einen Hohlkörper bildenden Formteils vom Gasdruck braucht nunmehr zu einem vorgewählten Zeitpunkt nur noch das Zwei-Wegeventil 11 nochmals aus seiner Absperrstellung kurzzeitig in seine Offenstellung bewegt zu werden.

Die Bewegungssteuerung für die Zwei-Wegeventile 9a, 9b, 9c kann zeitabhängig nacheinander erfolgen, wobei jeder Zeitzyklus mit dem Einspritzen einer vorgegebenen Menge der thermoplastischen Kunststoffmasse durch den Spritzkopf 2 in die Spritzform beginnt und so vorgewählt ist, daß er wiederum kurz vor dem Öffnen der Spritzform endet.

Auch die Bewegungssteuerung des Zwei-Wegeventils 11 kann zeitabhängig erfolgen.

Insbesondere im Zusammenhang mit dem Zwei-Wegeventil 11 wäre aber auch eine temperaturabhängige Steuerung denkbar, dergestalt, daß dieses kurzzeitig aus seiner Schließstellung in seine Öffnungsstellung gelangt, wenn nach vorhergehendem Öffnen des Zwei-Wegeventils 9b das in der Spritzform befindliche Formteil eine bestimmte Temperatur erreicht bzw. unterschreitet.

Wird - abweichend von Fig. 1 - nur mit einem der Zwei-Wegeventile 9a, 9b, 9c sowie auch nur mit einem diesem nachgeschalteten Druckventil 10a, 10b, 10c gearbeitet, dann muß, wie bereits erwähnt, das betreffende Druckventil als verstellbares Druckregelventil ausgeführt sein, um mit seiner Hilfe, entweder durch Direktbetätigung oder durch Fernbetätigung, das Druckniveau des Gases im Spritzkopf 2 bzw. in der daran angeschlossenen Spritzform regulieren zu können.

Während der Regelvorgang am jeweiligen Druckventil 10a bzw. 10b bzw. 10c stattfindet, kann das zugehörige Zwei-Wegeventil 9a bzw. 9b bzw. 9c ständig in seiner Offenstellung verbleiben. Wenn jedoch das Druckniveau des betreffenden Druckventils von einem vorhergehenden, höheren Wert heruntergeregelt und zugleich auch das Zwei-Wegeventil 11 geöffnet wird, sollte das dem Druckventil vorgeordnete Zwei-Wegeventil zur Vermeidung unnötigen Gasverlustes seine Schließstellung einnehmen, weil dann nämlich das Sperrventil 4 unwirksam ist.

Mit Hilfe der vorstehend anhand Fig. 1 beschriebenen Systeme läßt sich der Druck des strömungsfähigen Mediums, und zwar insbesondere eines Gases, innerhalb der Spritzform bzw. auf die über die Oberfläche des Formhohlraums derselben verteilte Kunststoffmasse bis zu deren Abkühlung zumindest zeitweilig variieren. Hieraus ergibt sich der Vorteil, daß Werkstoffstruktur und -dichte der Wandungen des als Hohlkörper geformten Spritzteils optimiert werden können und damit dessen Gebrauchswert erhöhen. Da sich der Mediendruck nicht nur in Abhängigkeit von unterschiedlichen Kunststoffmaterialien, sondern auch im Hinblick auf unterschiedliche Verarbeitungstemperaturen desselben variieren läßt, kann die Qualität der Kunststoff-Formteile in weiten Grenzen beeinflußt werden.

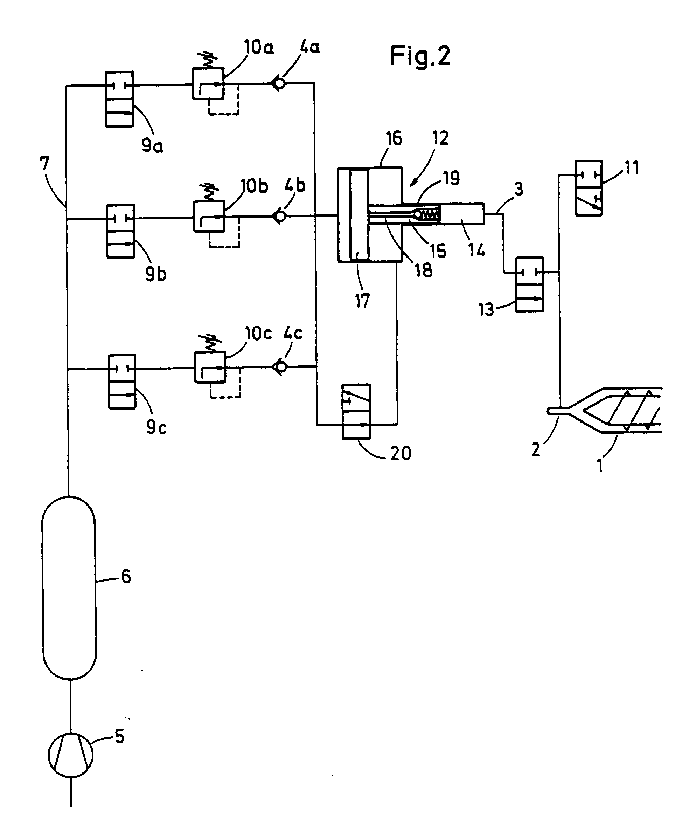

Das in Fig. 2 der Zeichnung dargestellte Regelungs- und Steuersystem stimmt in Aufbau und Wirkungsweise mit demjenigen nach Fig. 1 weitgehend überein.

Beim System nach Fig. 2 ist jedoch zusätzlich noch eine Dosierkolben-Einrichtung 12 sowie ein dieser nachgeschaltetes Zwei-Wegeventil 13 in Benutzung genommen.

Die Dosierkolben-Einrichtung 12 und das Zwei-Wegeventil 13 sind dabei in der Leitung 3 zum Spritzkopf 2 hin hintereinandergeschaltet vorgesehen.

Die Dosierkolben-Einrichtung 12 weist einerseits einen Dosierzylinder 14 mit einem darin axial verschiebbaren Dosierkolben 15 auf und ist andererseits mit einem Betätigungszylinder 16 und einem darin axial beweglichen Verstellkolben 17 ausgestattet. Der Betätigungszylinder 16 und der Verstellkolben 17 haben dabei einen um ein Mehrfaches größeren Querschnitt als der Dosierzylinder 14 und der Dosierkolben 15.

Betätigungszylinder 16 und Verstellkolben 17 sind doppelt wirkend ausgelegt, d.h., der Verstellkolben 17 kann im Betätigungszylinder 16 zwecks Verstellung in beiden Richtungen mit Druckmittel beaufschlagt werden.

Die vom Dosierkolben 15 abgewendete Seite des Betätigungszylinders 16 steht durch einen Axialkanal 18 des Verstellkolbens 17 und des Dosierkolbens 15 mit dem Dosierzylinder 14 in Verbindung. Dabei ist dem Axialkanal 18 im Dosierkolben 15 ein Sperrventil 19 zugeordnet, welches den Axialkanal 18 selbsttätig gegen einen Medienrückfluß aus dem Dosierzylinder 14 absperrt.

Der dem Dosierzylinder 14 abgewendete Zylinderraum des Betätigungszylinders 16 kann über jedes der drei Zwei-Wegeventile 9a, 9b, 9c und jedes der drei Druckventile 10a, 10b, 10c sowie über jedes der sich öffnenden Sperrventile 4a, 4b, 4c aus dem Druckspeicher 6 über die Leitung 7 mit Druckgas beaufschlagt werden, wobei dessen Druckniveau durch das jeweils wirksame der Druckventile 10, 10b, 10c bestimmt wird.

Auch der dem Dosierzylinder 14 näher liegende Zylinderraum des Betätigungszylinders 16 kann zeitweilig durch ein Zwei-Wegeventil 20 mit dem Druckmedium beaufschlagt werden, um die axiale Grundstellung des Verstellkolbens 17 und damit auch die Volumensgröße des Dosierzylinders 14 mit jeweils wirksamen Druckniveau voreinzustellen.

Bei Beaufschlagung des vom Dosierzylinder 14 abgewendeten Zylinderraums im Betätigungszylinder 16 gelangt das Druckgas durch den Axialkanal 18 bei geöffnetem Sperrventil 19 in den Dosierzylinder 14 und füllt diesen auf, sofern das Zwei-Wegeventil 13 die aus Fig. 2 ersichtliche Geschlossenstellung einnimmt.

Nach dem Schließen des Sperrventils 19 enthält dann der Dosierzylinder 14 eine durch die vorgegebene Axialstellung des Dosierkolbens 15 bestimmte Gasmengen. Solange dabei der Verstellkolben 17 im Betätigungszylinder 16 gegen Verschieben blockiert ist, also unter Übereinstimmenden Gasdruck steht, herrscht dabei auch im Dosierzylinder 14 der entsprechende Gasdruck. Wird nun nur das Zwei-Wegeventil 13 aus der Geschlossenstellung nach Fig. 2 in die Offenstellung bewegt, dann überströmt die im Dosierzylinder 14 enthaltene Gasmenge unter Schaffung eines entsprechenden Druckaufbaus durch den Spritzkopf in den Formhohlraum der daran anliegenden Spritzform und bewirkt dort die gleichmäßige Verteilung der thermoplastischen Kunststoffmasse an der Oberfläche des Formhohlraums. Durch die dabei auftretende Druckentspannung im Dosierzylinder 14 gibt das Sperrventil 19 den Axialkanal 18 unter der Einwirkung des anstehenden Gasdruckes frei, so daß der Dosierzylinder 14 wieder bis zu dem vorgegebenen Druckniveau mit Gas aufgefüllt wird. Bringt man nunmehr das Zwei-Wegeventil 20 aus der Schaltstellung nach Fig. 2 in die andere Schaltstellung, dann wird der dem Dosierzylinder 14 zunächst liegende Zylinderraum des Betätigungszylinders 16 entlüftet und der im anderen Zylinderraum des Betätigungszylinders auf den Verstellkolben 17 wirkende Gasdruck kommt dann voll zur Wirkung. Entsprechend dem Verhältnis der Fläche des Verstellkolbens 17 und der Fläche des Dosierkolbens 15 tritt nunmehr unter Verschiebung des Verstellkolbens 17 und des Dosierkolbens 15 eine Druckerhöhung des Gases innerhalb des Dosierzylinders 14 ein, die sich durch den Spritzkopf 2 bis in den Formhohlraum der Spritzform fortpflanzt und dort auf die thermoplastische Kunststoffmasse einwirkt.

Das über die Dosierkolben-Einrichtung 12 erhöhte Druckniveau kann mit Hilfe der Zwei-Wegeventile 9a, 9b, 9c und der Druckventile 10a, 10b, 10c dreifach variiert werden, sofern die Druckventile 10a, 10b, 10c jeweils unterschiedlich eingestellt sind.

Abweichend von der Darstellung in Fig. 2 ist es auch dort möglich, mit nur einem der Zwei-Wegeventile 9a, 9b, 9c und nur einem zugeordneten Druckventil 10a, 10b, 10c zu arbeiten, sofern das letztere als ein femverstellbares Druckregelventil ausgelegt ist.

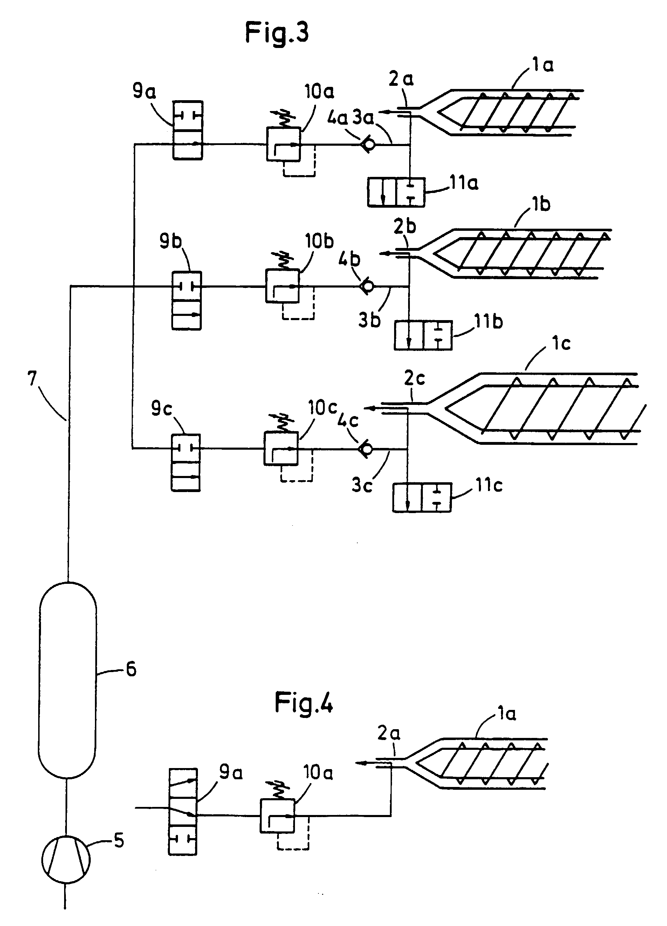

In Fig. 3 der Zeichnung ist ein Steuerungs- und Regelsystem gezeigt, welches von demjenigen nach Fig. 1 im Grunde genommen nur insofern abweicht, als es für das gleichzeitige Zusammenwirken mit mehreren, nämlich bspw. drei Schnekkenextruder 1a, 1b, 1c bzw. den zugehörigen Spritzköpfen 2a, 2b, 2c ausgelegt ist. Der Zwei-Wegeschieber 9a und das Druckventil 10a arbeiten hier nur mit dem Schneckenextruder 1a und seinem Spritzkopf 2a zusammen. In entsprechender Weise sind das Zwei-Wegeventil 9b und das Druckventil 10b nur dem Schneckenextruder 1b und seinem Spritzkopf 2b zugeordnet, während zum Schneckenextruder 1c nur das Zwei-Wegeventil 9c und das Druckventil 10c gehören.

Die Druckventile 10a bis 10c sollen in diesem Falle als fernbetätigbare Druckregelventile ausgelegt sein, damit die Möglichkeit gegeben ist, mit ihrer Hilfe das Druckniveau des in die Spritzköpfe 2a, 2b, 2c bzw. den Formhohlraum der daran anliegenden Spritzformen eingeleiteten Druckgases zweckentsprechend zu variieren.

Besonderer Vorteil der druckkontrollierten Medienzufuhr ist es, daß aus einer Druckversorgung 5/6 ohne weiteres mehrere Spritzgießmaschinen beaufschlagt werden können, wobei jeder Spritzgießmaschine auch nur ein Druckventil zugeordnet zu werden braucht, das auf den hier jeweils erforderlichen Druckwert einstellbar ist.

Damit eine Druckentlastung der Spritzköpfe 2a, 2b, 2c bzw. der daran anliegenden Spritzformen möglich ist, wird nach Fig. 3 jedem Schneckenextruder 1 ein eigenes Zwei-Wegeventil 11a, 11b, 11c zugeordnet, dessen Arbeitsweise dem Zwei-Wegeventil 11 nach Fig. 1 entspricht.

In Fig. 4 ist andeutungsweise dargestellt, daß das Entlüften der Spritzköpfe 2 bzw. 2a bis 2c und der Formhohlräume der daran angeschlossenen Spritzwerkzeuge auch ermöglicht werden kann, ohne daß die Zwei-Wegeschieber 11 bzw. 11a bis 11c erforderlich sind. Fig. 4 zeigt nämlich, daß es in diesem Falle nur nötig wäre, die Zwei-Wegeventile 9a, 9b, 9c jeweils durch 3/2 Wegeventile zu ersetzen, die eine zusätzliche Entlüftungsstellung schalten können. Bei allen in den Fig. 1 bis 4 der Zeichnung dargestellten und vorstehend beschriebenen Steuerungs- und Regelsystemen ist der Vorteil gegeben, daß der Druck des strömungsfähigen Mediums, und zwar insbesondere eines Gases, nach einem für das jeweilige Formteil und/oder Kunststoffmaterial vorgegebenen Profil geregelt und/oder gesteuert werden kann.

Die Beeinflussung der verschiedenen Steuer- und/oder Regelglieder läßt sich dabei bedarfsabhängig bewirken. Neben einer zeitabhängigen Beeinflussung ist daher auch eine wegabhängige Beeinflussung und gegebenenfalls sogar auch eine temperaturabhängige Beeinflussung möglich. Denkbar wäre es sogar, alle drei Beeinflussungsarten miteinander zu kombinieren oder gegebenenfalls auch eine Programmsteuerung vorzusehen.

Während dann, wenn die Druckventile als voreinstellbare Druckbegrenzungsventile ausgelegt sind der Gasdruck im Zusammenwirken mit dem Öffnen und Schließen der vorgeordneten Zwei-Wegeventile plötzlich bzw. abrupt geändert werden kann, ist es bei Auslegung der Druckventile als Druckregelventile ohne weiteres möglich, den Gasdruck allmählich an- und abschwellend zu regeln und/oder zu steuern.

Bei den auf die vorstehend beschriebene Art und Weise hergestellten Kunststoff-Formteile ist jeweils der Angußbereich mit einer vom Hohlraum nach außen führenden Öffnung versehen, die durch den Ein- und Austritt des Druckgases bedingt ist.

Diese Öffnung des als Hohlkörper ausgeführten Formteils kann vor dem Entformen desselben auf bestimmte Art und Weise verschlossen werden, wenn die Zufuhr und Ableitung des Druckgases unter Vermittlung des Spritzkopfes 2 stattfindet.

Wird nämlich unmittelbar nach dem Entlüften des Formteils die Düse des Spritzkopfes nochmals geöffnet und eine genau bestimmte Menge von thermoplastischem Kunststoff ausgetrieben, dann tritt hierdurch zwangsläufig eine Versiegelung der vorhandenen Öffnung ein.

Die Abgabe der zusätzlichen Menge des thermoplastischen Kunststoffs kann auf verschiedene Art und Weise erfolgen. So ist es bspw. möglich, beim Einspritzen des thermoplastischen Kunststoffs in die Spritzform den Schneckenkolben nicht völlig bis gegen den vorderen Anschlag zu fahren und dadurch eine geringe plastifizierte Kunststoffmenge für den Nachspritzvorgang zurückzuhalten. Möglich ist es aber auch, während der Einwirkzeit des Gases auf den Hohlraum des Spritzteils eine geringe Kunststoffmenge nachzuplastifizieren und diese noch nachträglich in die Öffnung zu spritzen. Schließlich wäre es aber auch denkbar, durch die Rotation der Extruderschnecke nachträglich eine bestimmte Menge von plastifiziertem Kunststoff in die verbliebene Öffnung zu introdieren.

Durch die Versiegelung der Öffnung wird in jedem Falle ein flüssigkeitsdichter Verschluß des Formteil-Hohlraums bewirkt.

Nach der vorstehend beschriebenen Verfahrensart können nicht nur Hohlkörper-Formteile durch Spritzgießen aus thermoplastischen Kunststoffen hergestellt werden, die aus einer Kunststoff-Komponente bestehen, sondern vielmehr auch solche, zu deren Herstellung zwei oder gegebenenfalls mehr Kunststoff-Komponenten zum Einsatz gelangen müssen.

Für das Spritzgießen von Hohlkörper-Formteilen, bei denen nur eine Kunststoff-Komponente in den Formhohlraum des Spritzwerkzeugs eingebracht und dann der Druckeinwirkung eines strömungsfähigen Mediums, insbesondere eines Gases, ausgesetzt wird, ist besonders ein Spritzkopf derjenigen Bauart geeignet, wie sie in der Patentanmeldung P 36 32 185.0 beschrieben wird. Hingegen läßt sich ein Spritzkopf nach Patentanmeldung P 36 32 928.2 dann in besonders vorteilhafter Weise zum Einsatz bringen, wenn ein Spritzgießen von Hohlkörper-Formteilen aus zwei Kunststoff-Komponenten ansteht, die während des Spritzvorgangs der Druckeinwirkung eines strömungsfähigen Mediums, insbesondere eines Gases ausgesetzt werden sollen.

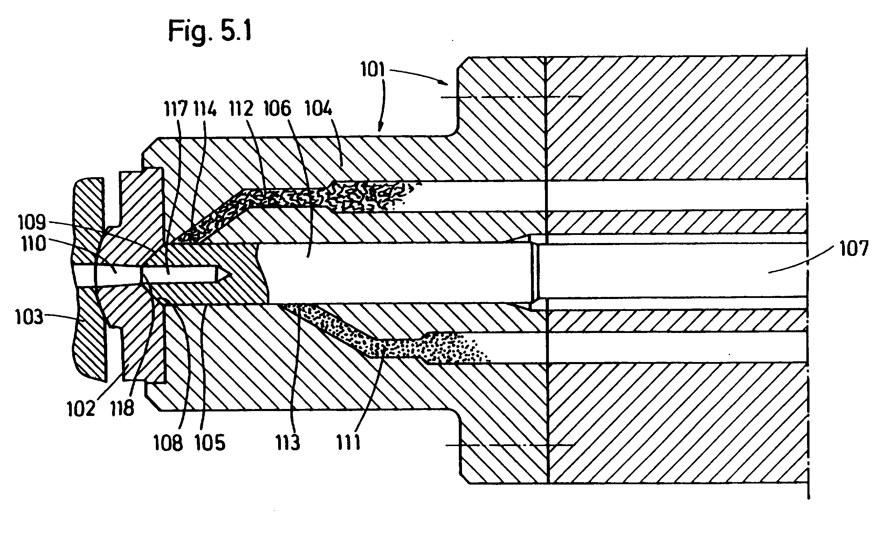

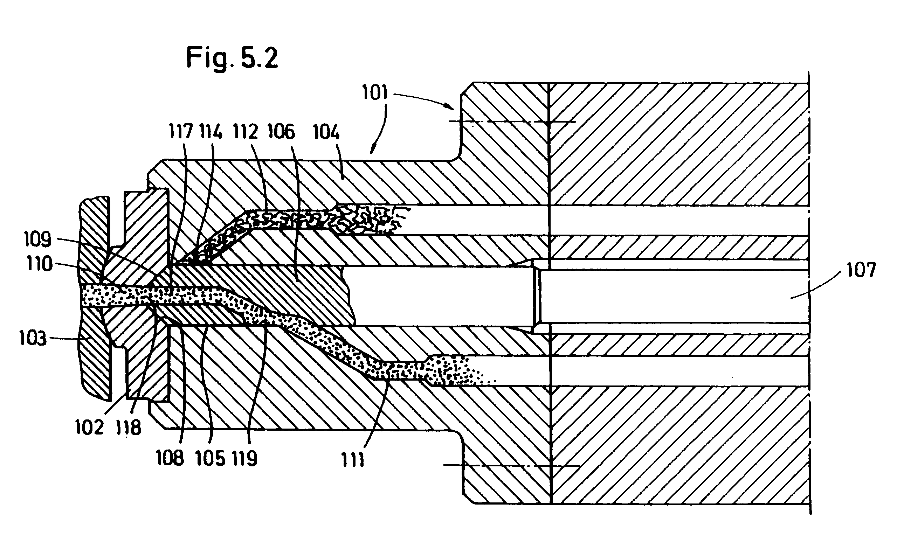

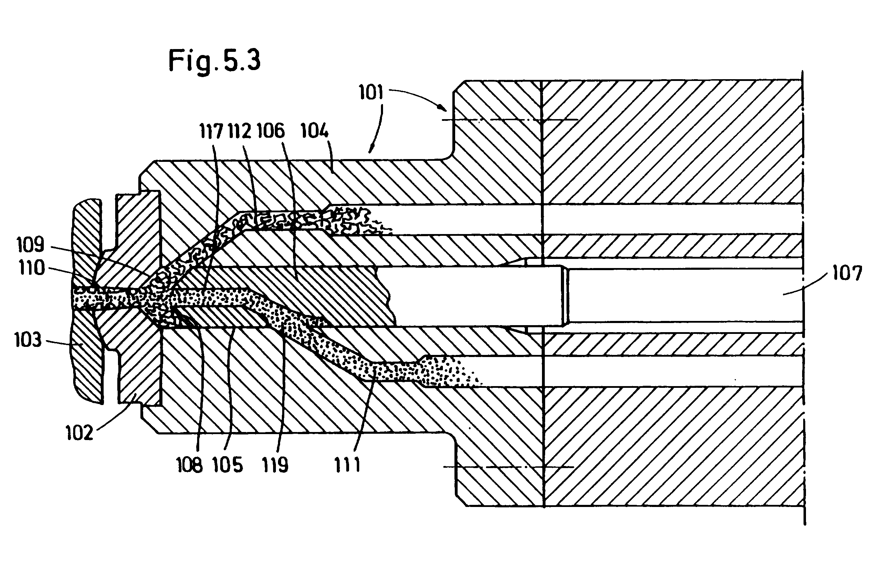

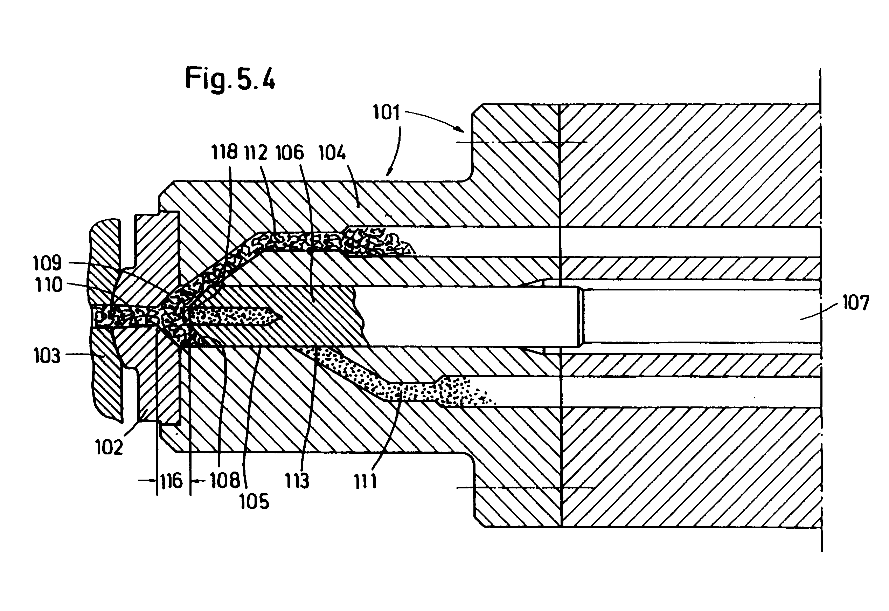

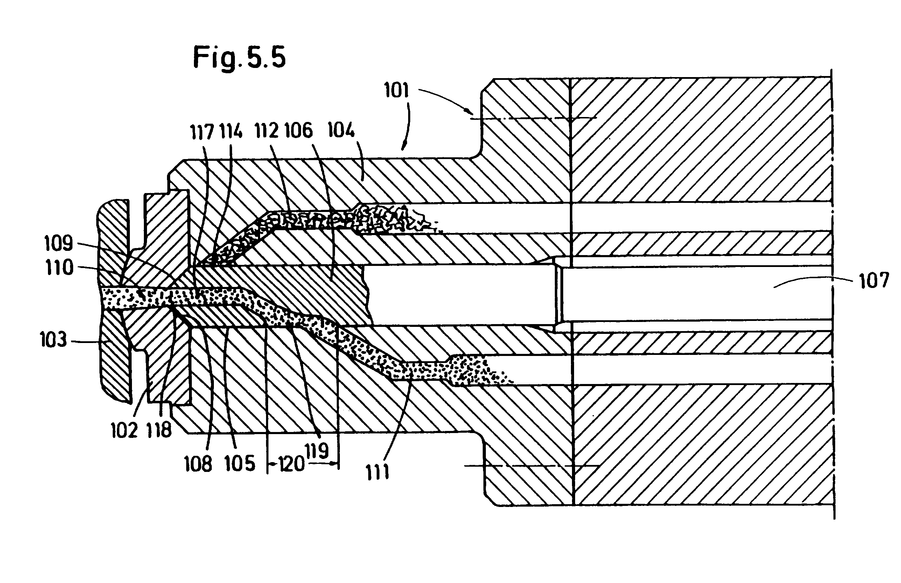

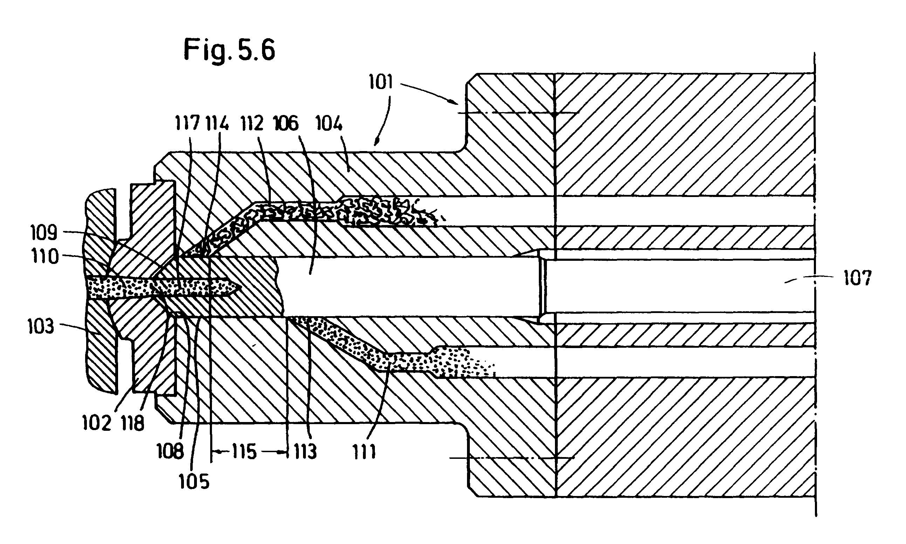

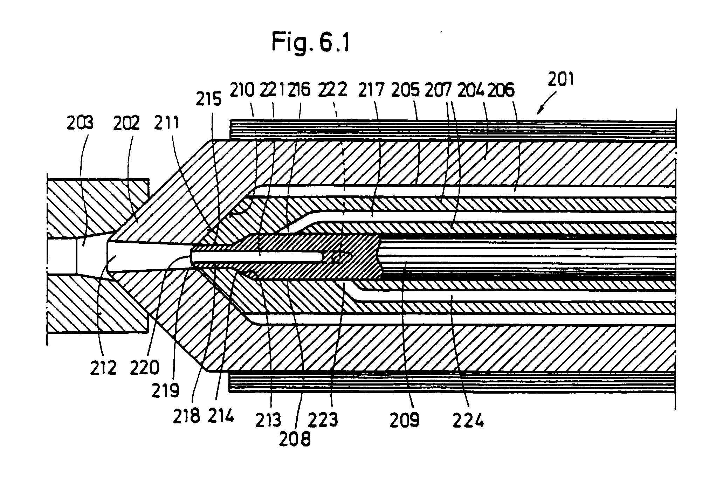

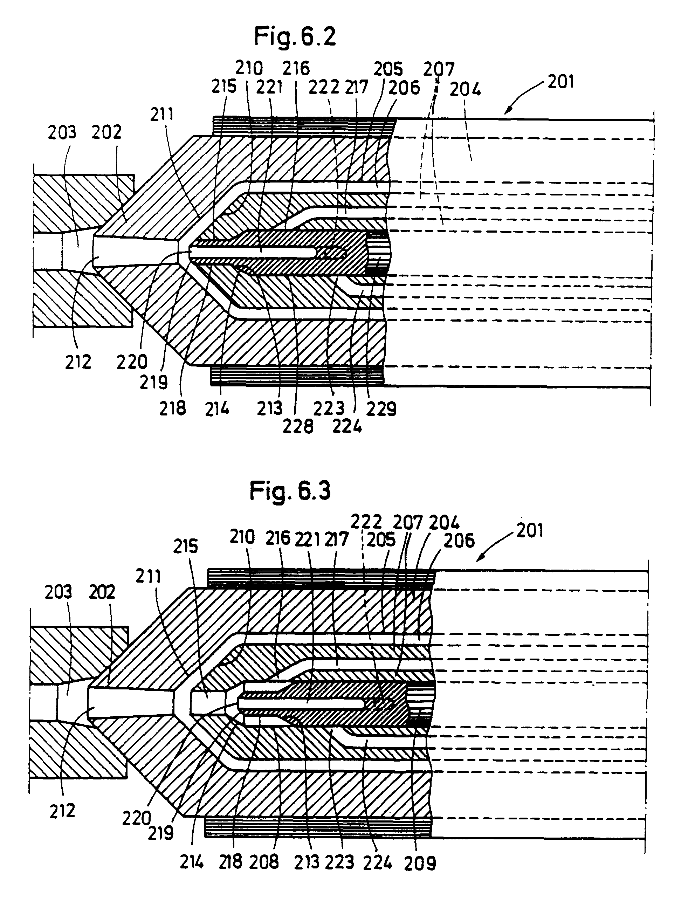

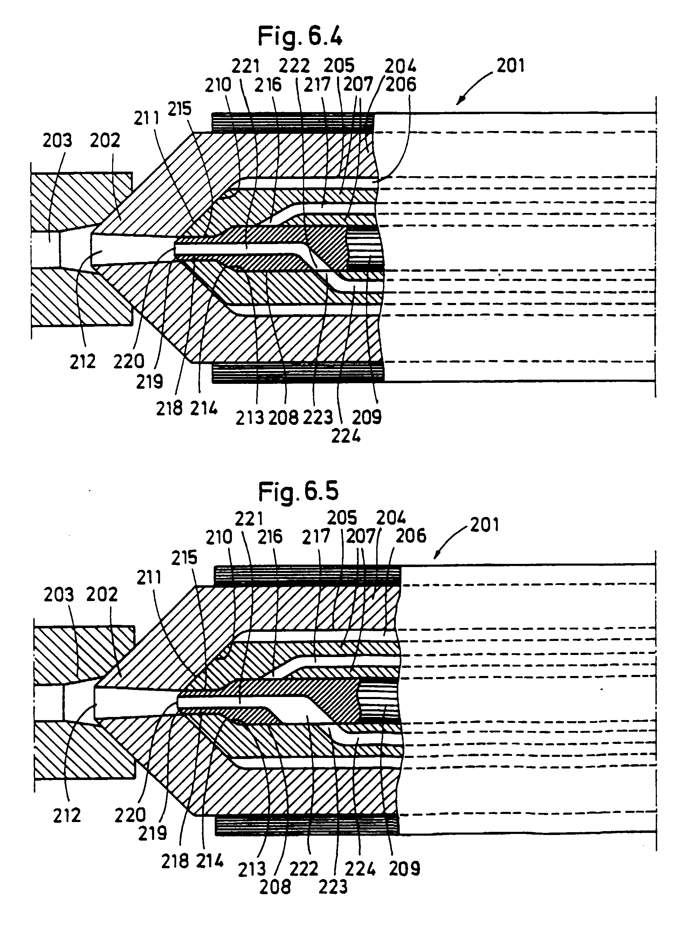

Während die erstgenannte Bauart eines Spritzkopfes in den Fig. 5.1 bis 5.6 der Zeichnung dargestellt ist, wird die zweite Bauart in den Fig. 6.1 bis 6.5 der Zeichnung wiedergegeben.

Die Fig. 5.1 bis 5.6 zeigen jeweils im Längsschnitt den wesentlichen Bereich eines Spritzkopfs 101 in verschiedenen Funktionsstellungen. Er liegt über sein Düsenmundstück 102 an der Angußbuchse 103 einer - weiter nicht gezeigten -Spritzform an.

Vom Düsenmundstück 102 aus erstreckt sich koaxial durch das Gehäuse 104 des Spritzkopfes 101 ein Hauptkanal 105, der eine Schließnadel 106 aufnimmt. Diese Schließnadel 106 hat dabei einen nach hinten durch den Spritzkopf 101 geführten Schaft 107, an dem ein - nicht gezeigter - Verschiebeantrieb angreift, der bspw. durch Druckmittel, insbesondere hydraulisch, betätigt werden kann.

Das Ende der Schließnadel 106 ist mit einem Dichtkonus 108 ausgestattet, welcher mit einem entsprechend angepaßten Dichtkonus 109 im Düsenmundstück 102 in der vorgeschobenen Abdichtstellung der Schließnadel 106 zusammenwirkt, wie das die Fig. 5.1, 5.2, 5.5 und 5.6 deutlich erkennen lassen.

Mit einem größeren Abstand von dem eine Austrittsöffnung 110 enthaltenden Düsenmundstück 102 mündet unter einem vorgegebenen Winkel - bspw. von 30 bis 40 ° - ein Zuführkanal 111 in den Hauptkanal 105 des Gehäuses 104 ein.

Mit geringem Abstand vom Düsenmundstück 102 mündet in den Hauptkanal 105 des Gehäuses 104 am Spritzkopf 101 ein weiterer Zuführkanal 112, ebenfalls unter einem vorgegebenen Winkel - bspw. zwischen 30 und 40 ° -.

Die Mündungen 113 und 114 der beiden Zuführkanäle 111 und 112 in den Hauptkanal 105 befinden sich vorzugsweise an sich gegenüberliegenden Umfangsbereichen des Hauptkanals 105 und sind dabei gegeneinander um den Abstand 115 axial versetzt vorgesehen, welcher vorzugsweise etwa doppelt so groß bemessen ist, wie die axiale Ausdehnung der beiden Mündungsöffnungen 113 und 114 der Zuführkanäle 111 und 112.

Das Ausmaß 116 der größstmöglichen Axialverschiebung für die Schließnadel 106 ist mindestens so groß gewählt, daß der Querschnitt der Mündungsöffnung 114 des Zuführkanals 112 in den Hauptkanal 105 einerseits vollständig geschlossen werden kann - Fig. 5.1, 5.2 und 5.5, 5.6 -, während er sich andererseits aber auch nahezu vollständig freigeben läßt -Fig. 5.3 und 5.4 -.

Koaxial zur Längsachse ist in die Schließnadel 106 ein Verbindungskanal 117 eingearbeitet, wobei sich dessen Mündungsöffnung 118 am freien Ende der Schließnadel 106 in Achsfluchtlage mit der Ausspritzöffnung 110 des Düsenmundstücks 102 befindet. Das andere Ende des Verbindungskanals 117 ist unter einem vorgegebenen Neigungswinkel - von bspw. 30 bis 40° - radial zum Umfang der Schließnadel 106 geführt und bildet dort eine Umfangsöffnung 119, deren axiale Ausdehnung 120 größer bemessen ist als die axiale Ausdehnung der Austrittsöffnung 113 am zugehörigen Zuführkanal 111. Bewährt hat es sich, wenn die axiale Ausdehnung 120 der radialen Umfangsöffnung 119 etwa doppelt so groß bemessen wird wie die axiale Ausdehnung der Austrittsöffnung 113 des Zuführkanals 111. Hierdurch kann sichergestellt werden, daß die Strömungsverbindung zwischen dem Zuführkanal 111 und dem Verbindungskanal 117 auch bei einer Axialverschiebung der Schließnadel 106 aufrechterhalten werden kann, wie das der Vergleich zwischen den Fig. 5.2 und 5.4 der Zeichnung deutlich macht.

Damit sich aber die Strömungsverbindung des Zuführkanals 111 zum Verbindungskanal 117 jederzeit auch unterbrechen läßt, ist die Schließnadel 106 nicht nur axial verschiebbar, sondern auch winkelverdrehbar im Gehäuse 104 bzw. im Hauptkanal 105 des Spritzkopfes 101 untergebracht. Das Ausmaß der Verdrehbarkeit der Schließnadel 106 kann dabei winkelbegrenzt werden, und zwar so, daß einerseits die radiale Umfangsöffnung 119 des Verbindungskanals 117 von der Austrittsöffnung 113 des Verbindungskanals 111 abgetrennt ist - Fig. 5.1, 5.3 und 5.6 -, während sie andererseits hiermit in Verbindung steht - Fig. 5.2, 5.4 und 5.5 -.

Ein Verdrehwinkel von bspw. 90° dürfte in den meisten Fällen ausreichen, um die Strömungsverbindung des Zuführkanals 111 mit dem Verbindungskanal 117 herbeizuführen und zu unterbrechen.

Im einfachsten Falle werden Axialverschiebung und Winkeldrehung der Schließnadel 106 unabhängig voneinander über getrennte Antriebe herbeigeführt und gesteuert. Hierbei wäre es dann bedarfsweise möglich, Translations- und Rotationsbewegung der Schließnadel 106 wahlweise gleichzeitig oder zueinander zeitversetzt auszuführen.

Allerdings besteht auch ohne weiteres die Möglichkeit, die Translations- und Rotationsbewegung der Schließnadel 106 miteinander zu koppeln und dadurch in vorgegebenen Abhängigkeitsverhältnissen auszusteuern. Hierzu können ohne weiteres Kurven- bzw. Kulissentriebe eingesetzt werden, die sich dann auf unterschiedliche Bedarfsfälle abstimmen lassen.

Denkbar wäre es allerdings auch, die Schließnadel 106 lediglich axial verschiebbar im Gehäuse 104 des Spritzkopfes 101 vorzusehen und sie mit einer Hülse zu umgeben, die winkelverdrehbar, jedoch axial unverschiebbar im Gehäuse 104 des Spritzkopfes 101 gehalten wird. In diesen Hülse wäre dabei dann die radiale Umfangsöffnung 119 mit der axialen Ausdehnung 120 eingearbeitet, welche je nach ihrer Winkeldrehlage die Strömungsverbindung zwischen dem Zuführkanal 111 und dem Verbindungskanal 117 herstellt oder unterbricht.

Bei dem aus der Zeichnung ersichtlichen Spritzkopf 101 dient der Zuführkanal 111 im Gehäuse 104 zusammen mit dem Verbindungskanal 117 in der Schließnadel 106 zur Zuführung des strömungsfähigen Mediums, insbesondere des Druckgases, während durch den Zuführkanal 112 die Kunststoffschmelze an den Hauptkanal 105 herangeführt wird.

Bei der aus Fig. 5.1 ersichtlichen Betätigungsstellung des Spritzkopfes 101, nämlich in der geschlossenen Grundstellung der Schließnadel 106 gelangt der Schmelzestrom durch den Zuführkanal 112 lediglich bis an den Umfang der Schließnadel 106 heran. Er kann daher weder in den Hauptkanal 105 noch in das Düsenmundstück 102 gelangen.

Bei der aus Fig. 5.2 ersichtlichen Bedienstellung befindet sich die Schließnadel 106 zwar noch in ihrer vorgeschobenen Schließstellung, sie wurde jedoch in Umfangsrichtung so gedreht, daß die Austrittsöffnung 113 des Zuführkanals 111 über die radiale Umfangsöffnung 119 mit dem Verbindungskanal 117 in der Schließnadel 106 korrespondiert. Das im Zuführkanal 111 anstehende strömungsfähige Medium, insbesondere ein Druckgas, kann daher durch den Verbindungskanal 117 und die Ausspritzöffnung 110 des Düsenmundstücks 102 in die Spritzform gelangen.

In der Stellung nach Fig. 5.3 wird die Austrittsöffnung 114 des Zuführkanals 112 in den Hauptkanal 105 freigegeben und zugleich die Mündungsöffnung 118 des Verbindungskanals 117 von der Ausspritzöffnung 110 des Düsenmundstücks 102 weg in den Hauptkanal 105 zurückgezogen. In dieser Stellung ist eine gleichzeitige Zufuhr thermoplastischer Kunststoffmasse und des strömungsfähigen Mediums durch den Hauptkanal 105 in die Anspritzöffnung 110 des Düsenmundstücks 102 möglich.

Wird die Schließnadel 106 in ihrer aus Fig. 5.3 ersichtlichen Axialstellung um ihre Längsachse in die Grundstellung zurückgedreht, so daß die Austrittsöffnung 113 des Zuführkanals 111 außer Strömungsverbindung mit der radialen Umfangsöffnung 119 des Verbindungskanals 117 kommt, dann kann die Zufuhr des strömungsfähigen Mediums, insbesondere des Druckgases, hierdurch unterbrochen werden.

Sobald die gewünschte bzw. erforderliche Menge von Kunststoffmasse in die Spritzform gelangt ist, wird die Schließnadel 106 aus der Stellung nach Fig. 5.4 sowohl verdreht als auch axial verschoben, derart, daß sich zunächst wieder ein Betriebszustand entsprechend der Fig. 5.3 und dann ein solcher entsprechend der Fig. 5.5 einstellt. Mit dem strömungsfähigen Medium, insbesondere dem Druckgas, wird dabei in der Schaltstellung nach Fig. 5.5 der erforderliche Nachdruck auf das in der Spritzform befindliche Kunststoff-Formteil ausgeübt, so daß der Formhohlraum seine optimale Füllung und das Kunststoff-Formteil seine optimale Gestalt erhält.

Wird nun die Schließnadel 106 in die Stellung gemäß Fig. 5.6 gedreht, dann ist zugleich die Funktionsstellung nach Fig. 5.1 wieder erreicht.

Die Schaltstellungen des Spritzkopfes 101 nach den Fig. 5.2 und 5.5 der Zeichnung können nicht nur der Zufuhr des unter Druck stehenden, strömungsfähigen Mediums in den Formhohlraum der Spritzform dienen. Vielmehr ist es auch möglich, diese Stellung der Düsennadel 106 zu nutzen, um den Druckabbau aus dem Hohlkörper-Formteil vor dem Öffnen der Spritzform zu bewirken.

Mit dem Spritzkopf nach den Fig. 6.1 bis 6.5 wird bei der Herstellung von Hohlkörper-Formteilen gearbeitet, die unter Benutzung zweier verschiedener Kunststoff-Komponenten gefertigt werden müssen.

Er ist über sein Düsenmundstück 202 an die Angußbuchse 203 einer ansonsten nicht dargestellten Spritzform anlegbar.

Im Gehäuse 204 des Spritzkopfes 201 ist koaxial zum Düsenmundstück 202 ein Kanal 205 ausgebildet, in dem unter Bildung eines Ringspaltes 206 ein rohrförmiger Einsatz 207 begrenzt axial verschiebbar aufgenommen ist. Innerhalb des rohrförmigen Einsatzes 207, und zwar in enger Anpassung an dessen Innenumfang 208, ist wiederum eine Nadel 209 begrenzt axial verschiebbar geführt. Sowohl der rohrförmige Einsatz 207 als auch die Nadel 209 sind mit einem nach hinten durch den Spritzkopf 201 geführten - nicht gezeigten - Schaft versehen, an dem jeweils ein Verschiebeantrieb angreift, der bspw. durch Druckmittel, insbesondere hydraulisch, betätigt werden kann.

Das vordere Ende des rohrfömrigen Einsatzes 207 ist mit einem Dichtkonus 210 versehen, der mit einem angepaßten Dichtkonus 211 im Düsenmundstück 202 in der vorgeschobenen Abdichtstellung - Fig. 6.1 - des rohrförmigen Einsatzes 207 zusammenwirkt und dabei den Ringspalt 206 gegen die Austrittsöffnung 212 des Düsenmundstücks 202 absperrt. Durch axiales Zurückfahren des rohrförmigen Einsatzes 207 mittels seines Verschiebeantriebs wird der Dichtkonus 210 vom Dichtkonus 211 abgehoben und damit der Ringspalt 206 mit der Austrittsöffnung 212 in Verbindung gebracht - Fig. 2 - so daß das in diesem befindliche, thermoplastische Kunststoffmaterial in die Spritzform gelangen kann.

Auch die Nadel 209 ist mit einem Dichtkonus 213 versehen, welcher in der vorgeschobenen Stellung der Nadel 209 an einem entsprechenden Dichtkonus 214 im rohrfömigen Einsatz 207 anliegt, wodurch dessen Innenumfang 208 durch die zentrale Durchtrittsöffnung 215 abgesperrt wird.

Nahe dem Dichtkonus 214 liegt am Innenumfang 208 des rohrförmigen Einsatzes 207 die Mündung 216 eines Zuführkanals 217 für ein zweites, thermoplastisches Kunststoffmaterial, wie das deutlich den Fig. 1 bis 5 entnommen werden kann. Der Zuführkanal 217 verläuft dabei in Längsrichtung durch die Wand des rohrförmigen Einsatzes 207 und steht an seinem hinteren Ende mit einer Spritzeinheit für das betreffende thermoplastische Kunststoffmaterial in Verbindung. Eine entsprechende Spritzeinheit für thermoplastisches Kunststoffmaterial ist natürlich auch an den Ringspalt 206 zwischen dem Gehäuse 204 und dem rohrförmigen Einsatz 207 angeschlossen.

Ein wichtiges Ausbildungsmerkmal besteht noch darin, daß die Nadel 209 an ihrem freien Ende einen im Durchmesser verringerten Ansatz 218 aufweist, der in vorgeschobener Lage der Nadel 209 in die Durchtrittsöffnung 215 des rohrförmigen Einsatzes 207 hineinragt und diesen auf seiner ganzen Länge ausfüllt.

Besonders zweckmäßig ist es sogar, wenn in der vorgeschobenen Stellung der Nadel 209 der Ansatz 218 mit seinem vorderen Ende geringfügig aus der Durchtrittsöffnung 215 vorsteht und dort mit einer Anfassung versehen ist, die sich als Verlängerung an den Dichtkonus 210 des rohrförmigen Einsatzes 207 anschließt und dabei um ein geringes Maß in die Autrittsöffnung 212 des Düsenmundstücks 202 vorspringt.

Die Nadel 209 weist im freien Ende ihres Ansatzes 218 eine zentrale Düsenöffnung 220 auf, an die sich nach rückwärts ein Verbindungskanal 221 anschließt, der wiederum eine radiale Umfangsöffnung 222 hat.

Der radialen Umfangsöffnung 222 des Verbindungskanals 221 ist am Innenumfang 208 des rohrförmigen Einsatzes 207 die radiale Mündung 223 eines längsverlaufenden Verbindungskanals 224 zugeordnet, welcher sich - ebenso wie der Zuführkanal 217 - in der Wand des rohrförmigen Einsatzes 207 befindet, und zwar vorzugsweise in einem zum Zuführkanal 217 diametral gegenüberliegenden Querschnittsbereich. Die radiale Mündung 223 des Verbindungskanals 224 hat dabei einen größeren Abstand vom Dichtkonus 214 als die radiale Mündung 216 des Zuführkanals 217.

An dieser Stelle sei erwähnt, daß die Nadel 209 innerhalb des rohrförmigen Einsatzes 207 nicht nur axial verschiebbar geführt, sondern vielmehr auch noch zumindest begrenzt winkelverdrehbar hierin gelagert ist und zu diesem Zweck mit einem - nicht gezeigten - Drehantrieb gekuppelt ist, der bspw. durch Druckmittel, insbesondere hydraulisch, betätigt werden kann. Auf diese Art und Weise ist es möglich, die radiale Umfangsöffnung 222 des Verbindungskanal 221 der Nadel 209 wahlweise mit der Mündung 223 des Verbindungskanals 224 im rohrförmigen Einsatz 207 in und außer Strömungsverbindung zu bringen.

Während beim Ausführungsbeispiel des Spritzkopfes 201 nach den Fig. 6.1 bis 6.4 sowie die radiale Umfangsöffnung 222 des Verbindungskanals 221 als auch die Mündung 223 des Verbindungskanals 224 eine Ausgestaltung haben, welche die Herstellung einer Strömungsverbindung nur in der vollständig vorgeschobenen Axialstellung der Nadel 209 ermöglicht, ist in Fig. 6.5 eine Ausgestaltung der radialen Umfangsöffnung 222 zu sehen, die die Herstellung einer solchen Strömungsverbindung in jeder möglichen Axialstellung der Nadel 209 relativ zum rohrförmigen Einsatz 207 zuläßt.

Durch den Verbindungskanal 224 im rohrförmigen Einsatz 207 und den Verbindungskanal 221 in der Nadel 209 kann der zentralen Düsenöffnung 220 des Spritzkopfes 201 ein strömungsfähiges Medium, insbesondere ein Druckgas, zugeführt werden, sobald die radiale Umfangsöffnung 222 des Verbindungskanals 221 mit der Mündung 223 des Verbindungskanals 224 in Deckungslage gebracht wird. In diesem Falle ist dann der Verbindungskanal 224 an ein Steuerungs- und Regelsystem angeschlossen, wie es in einer der Fig. 1 bis 3 der Zeichnung gezeigt wird.

Durch die zentrale Düsenöffnung 220 kann das strömungsfähige Medium, insbesondere Gas, unter relativ hohem Druck in die Spritzform gebracht werden, nachdem zuvor in diese zunächst Kunststoffmaterial aus dem Ringspalt 206 und dann Kunststoffmaterial aus dem rohrförmigen Einsatz 207 eingepreßt worden ist, wie das die Fig. 6.2 und 6.3 andeutungsweise erkennen lassen.

während bei der Bauart eines Spritzkopfes 201 nach den Fig. 6.1 bis 6.4 die zentrale Düsenöffnung 220 in der Nadel 209 eine Medienzufuhr in das Spritzwerkzeug nur zuläßt, wenn zugleich die vom rohrförmigen Einsatz 207 umschlossene, innere Düse zuvor in Schließlage gebracht worden ist -Fig. 6.4 -, zeigt Fig. 6.5 eine Ausbildungsvariante, bei der die radiale Umfangsöffnung 222 des Verbindungskanals 221 in der Nadel 209 eine solche axiale Ausdehnung hat, daß sie sowohl in der Schließlage der inneren Düse als auch in deren Öffnungslage mit der radialen Mündung des Verbindungskanals 224 im rohrförmigen Einsatz 207 in und außer Strömungsverbindung gebracht werden kann. Hierzu ist lediglich die entsprechende Winkeldrehung der Nadel 209 relativ zum rohrförmigen Einsatz 207 nötig.

Durch die Benutzung der vorstehend anhand der Fig. 5.1 bis 5.6 sowie 6.1 bis 6.5 beschriebenen Spritzköpfe wird das Spritzgießen hochwertiger Hohlkörper-Formteile aus thermoplastischen Kunststoffen besonders günstig beeinflußt, weil nämlich die zweckentsprechende Zufuhr und Ableitung des unter variierbarem Druck setzbaren strömungsfähigen Mediums unmittelbar mit Hilfe des Spritzkopfes bewirkt werden kann, der auch das dosierte Einbringen der thermoplastischen Kunststoffschmelze in den Formhohlraum der Spritzform sicherstellt. Die Variation des Druckniveaus für das strömungsfähige Medium, insbesondere das Druckgas, ist aber unabhängig vom Einsatz der in den Fig. 5.1 bis 5.6 bzw. 6.1 bis 6.5 gezeigten Spritzköpfe 101 bzw. 201 allein mit Hilfe eines der Steuerungs- und Regelsysteme möglich, wie sie in den Fig. 1 bis 4 der Zeichnung dargestellt und weiter oben eingehend erläutert sind.

## Patentansprüche

1. Verfahren zum Spritzgießen von Formteilen aus thermoplastischen Kunststoffen,
- bei welchem zunächst eine zur Ausbildung des Formteiles ausreichende Menge des schmelzflüssigen Kunststoffs in die Spritzform (103; 203) gedrückt wird,
- bei welchem dann in die Spritzform (103; 203) und/oder den thermoplastischen Kunststoff ein strömungsfähiges Medium, insbesondere Gas, mit einem Druck eingepreßt wird, der die Kunststoffmasse gleichmäßig über die Oberfläche des Formhohlraums unter Bildung eines Hohlkörpers verteilt,
- bei welchem weiterhin der unter Mediendruck gehaltene Hohl'körper in der Spritzform (103; 203) abgekühlt wird,
- und bei welchem schließlich der Mediendruck aus dem Hohlkörper abgelassen (11, 11a, 11b, 11c) und dann das Formteil entformt sowie aus der Spritzform (103; 203) entnommen wird,
- wobei das strömungsfähige Medium aus einem mindestens auf einem vorgegebenen Mindestdruck gehaltenen Druckspeicher (6) in die Spritzform (103; 203) eingeleitet und/oder auf die über die Oberfläche des Formhohlraums verteilte Kunststoffmasse zur Einwirkung gebracht wird,
- wobei der Druck dieses strömungsfähigen Mediums im Formhohlraum unabhängig vom herrschenden Druck im Druckspeicher (6) bis zur Abkühlung der Kunststoffmasse zumindest zeitweilig kontrolliert und/oder variiert (10a, 10b, 10c),
- währenddessen aber gegen Rückströmung aus dem Formhohlraum gesperrt (4; 4a bis 4c) wird,
und wobei
- das strömungsfähige Medium einem Strömungsweg oder mehreren verschiedenen, z.B. drei, Strömungswegen (8a, 8b, 8c) zugeführt
- und dabei in diesen bzw. in diese immer mit dem im Druckspeicher (6) herrschenden Druck eingespeist wird,
- dieser Strömungsweg oder jeweils einer dieser Strömungswege (8a bzw. 8b bzw. 8c) zur Verbindung (2, 3) mit der Spritzform (103; 203) freigegeben wird (9a bzw. 9b bzw. 9c),
- das immer mit dem im Druckspeicher (6) herrschenden Druck eingespeiste strömungsfähige Medium erst im freigegebenen Strömungsweg oder im jeweils freigegebenen Strömungsweg (8a bzw. 8b bzw. 8c) auf eine ausgewählte Druckstufe bzw. ein eingestelltes Druckniveau gebracht (10a bzw. 10b bzw. 10c)
- sowie mit dieser Druckstufe bzw. diesem Druckniveau (10a bzw. 10b bzw. 10c) zeitweilig in den Formhohlraum der Spritzform (103; 203) hinein wirksam gemacht wird (2, 3, 4),
- und dabei der Mediendruck nach einem für das jeweilige Formteil und/oder Kunststoffmaterial vorgegebenen Profil geregelt (10a, 10b, 10c) und/oder gesteuert (9a, 9b, 9c) wird.

2. Verfahren nach Anspruch 1,
**dadurch gekennzeichnet,**
daß der Mediendruck zeitabhängig geregelt (10a, 10b, 10c) und oder gesteuert (9a, 9b, 9c) wird.

3. Verfahren nach Anspruch 1,
**dadurch gekennzeichnet,**
daß der Mediendruck wegabhängig geregelt (10a, 10b, 10c) und oder gesteuert (9a, 9b, 9c) wird.

4. Verfahren nach Anspruch 1,
**dadurch gekenzeichnet,**
daß der Mediendruck zeit- und wegabhängig geregelt (10a, 10b, 10c) und oder gesteuert (9a, 9b, 9c) wird.

5. Verfahren nach einem der Ansprüche 1 bis 4,
**dadurch gekenzeichnet,**
daß der Mediendruck temperaturabhängig, bspw. über die Temperatur der im Formhohlraum der Spritzform (103; 203) befindlichen Kunststoffmasse geregelt (10a, 10b, 10c) und oder gesteuert (9a, 9b, 9c) wird.

6. Verfahren nach einem der Ansprüche 1 bis 5,
**dadurch gekenzeichnet,**
daß der Mediendruck in Abhängigkeit vom Innendruck im Formhohlraum der Spritzform (103; 203) variiert (10a, 10b, 10c) und/oder gesteuert (9a, 9b, 9c) wird.

7. Verfahren nach einem der Ansprüche 1 bis 5,
**dadurch gekennzeichnet,**
daß der Mediendruck allmählich an- und abschwellend geregelt (10a, 10b, 10c) und/oder gesteuert (9a, 9b, 9c) wird.

8. Verfahren nach einem oder mehreren der Ansprüche 1 bis 7,
**dadurch gekennzeichnet,**
daß der Mediendruck jeweils plötzlich bzw. stufenweise verändert wird.

9. Vorrichtung zum Spritzgießen von Formteilen aus thermoplastischen Kunststoffen,
- bei der an den Spritzkopf (2; 101; 201) bzw. das Düsenmundstück (102; 202) am vorderen Ende des Gehäuses eines Schneckenextruders (1) eine den Formhohlraum für die Bildung des Formteils enthaltende Spritzform (103; 203) anlegbar ist,
- bei der der Formhohlraum dieser Spritzform (103; 203) durch den Spritzkopf (2; 101; 201) bzw. das Düsenmundstück (102; 202) aus dem Schneckenextruder (1) mit Kunststoffschmelze beschickbar ist,
- bei der die Überführung der Kunststoffschmelze durch den Spritzkopf (2; 101; 201) bzw. das Düsenmundstück (102; 202) in die Spritzform (103; 203) z. B. durch eine im Gehäuse des Schneckenextruders (1) über einen Verschiebeantrieb gegenüber dem Düsenmundstück (102; 202) verstellbare Schließnadel (106; 209) beeinflußbar ist,
- bei der der Formhohlraum in der Spritzform (103; 203) über Leitungen (3, 7) mit einem Druckspeicher (6) für ein strömungsfähiges Medium verbindbar ist (9a, 9b, 9c; 4),
- bei der in den vom Druckspeicher (6) zur Spritzform (103; 203) führenden Leitungen Steuerelemente (9a, 9b, 9c) und oder Regelelemente (10a, 10b, 10c) für das strömungsfähige Medium vorgesehen sind,
- und bei der in diesen Leitungen (3, 7) dem Formhohlraum der Spritzform (103; 203) eine Rückströmsperre (4; 4a, 4b, 4c) für das strömungsfähige Medium vorgeordnet ist,
und wobei
in den vom Druckspeicher (6) zum Formhohlraum der Spritzform (103; 203) führenden Leitungen (7, 3 bzw. 7, 3a, 3b, 3c) als Steuerelemente (9a, 9b, 9c) Wegeventile sowie als Steuer- und/oder Regelelemente (10a, 10b, 10c) zur Steuerung und/oder Regelung eines Druckprofils geeignete Druckventile vorgesehen sind.

10. Vorrichtung nach Anspruch 9,
**dadurch gekennzeichnet,**
daß die als Steuer- und/oder Regelelemente (10a, 10b, 10c) vorgesehenen Druckventile als Druckbegrenzungsventile ausgeführt sind.

11. Vorrichtung nach Anspruch 9,
**dadurch gekennzeichnet,**
daß die als Steuer- und/oder Regelelemente (10a, 10b, 10c) vorgesehenen Druckventile als Druckregelventile ausgelegt sind.

12. Vorrichtung nach einem der Ansprüche 9 und 11,
**dadurch gekennzeichnet,**
daß als Steuer- und/oder Regelelemente (10a, 10b, 10c) mehrere parallel geschaltete Druckventile vorgesehen sind (Figuren 1 und 2), die unabhängig voneinander einstellbar und ansteuerbar (9a, 9b, 9c), aber mit dem Formhohlraum der gleichen Spritzform (103; 203) verbindbar sind.

13. Vorrichtung nach einem der Ansprüche 9 bis 11,
**gekennzeichnet durch,**
mehrere Gruppen parallel geschalteter Druckventile (10a, 10b, 10c; Figur 3), die mit den Formhohlräumen verschiedener Spritzformen (103; 203) in Verbindung stehen (2a bzw. 2b, 2c), aber unabhängig voneinander einstellbar und ansteuerbar (9a, 9b, 9c) sind.

14. Vorrichtung nach einem der Ansprüche 9 bis 13,
**dadurch gekennzeichnet,**
daß der Druckspeicher (6) über den Spritzkopf (2 bzw. 101 bzw. 201) des Schneckenextruders (1) bzw. der Spritzgießmaschine an den Formhohlraum der Spritzform (103; 203) anschließbar ist.

15. Vorrichtung nach Anspruch 14,
**dadurch gekennzeichnet,**
- daß der Spritzkopf (101) je einen Zuführkanal (112 bzw. 111) für die Kunststoffschmelze und das strömungsfähige Medium enthält, die einem in eine Austrittsöffnung (110) übergehenden Hauptkanal (105) zugeordnet ist,
- daß die Zuführkanäle (112 bzw. 111) mit axialem Abstand von der Austrittsöffnung (110) und voneinander sowie gegeneinander winkelversetzt in den Hauptkanal (105) münden,
- daß eine axial im Hauptkanal (105) verschiebbare Schließnadel (106) vorgesehen ist, mit der die beiden Zuführkanäle (112 und 111) vom Hauptkanal (105) abtrennbar sind,
- daß in der Schließnadel (106) ein im wesentlichen in axialer Richtung verlaufender Verbindungskanal (117) angeordnet ist, der einerseits von der Stirnfläche (118) aus radial zum entfernteren Zuführkanal (111) hin aus dem Umfang der Schließnadel (106) herausgeführt ist,
- und daß die radiale Umfangsöffnung (119) des Verbindungskanals (117) sowohl in der geschlossenen Axialstellung als auch in zumindest einer teilweise geöffneten Axialstellung der Schließnadel (106) etwa auf gleicher Höhe mit der inneren radialen Austrittsöffnung (113) des entfernteren Zuführkanals (111) liegt.

16. Vorrichtung nach Anspruch 14,
**dadurch gekennzeichnet,**
- daß im Spritzkopf (201) einerseits durch einen im Gehäuse (204) axial verschiebbar geführten, rohrförmigen Einsatz (207) eine innere Düse (13, 14, 15) für ein erstes Kunststoffmaterial gebildet ist, die wiederum eine ebenfalls axial verschiebbare Nadel (209) als Schließvorrichtung enthält,
- daß durch einen Ringraum (206) zwischen dem rohrförmigen Einsatz (207) und dem Gehäuse (204) eine Ringdüse (210, 211) für das zweite Kunststoffmaterial gebildet ist, zu der der axial verschiebbare, rohrförmige Einsatz (207) die Schließvorrichtung bildet,
- daß die Schließnadel (209) an ihrem freien Ende einen Ansatz (218) hat, der in der Schließstellung der inneren Düse (13, 14, 15) zumindest bündig mit dem freien Ende des rohrförmigen Einsatzes (207) abschließt,
- daß die Schließnadel (209) an ihrem freien Ende (219) eine zentrale Düsenöffnung (220) enthält, an die sich nach rückwärts ein Verbindungskanal (221) anschließt, der eine radiale Umfangsöffnung (222) hat,
- daß in der Wandung des rohrförmigen Einsatzes (207) ein längsverlaufender Verbindungskanal (224) ausgebildet ist, der am Innenumfang (208) des rohrförmigen Einsatzes (207) radial ausmündet (223),
- und daß die radiale Umfangsöffnung (222) des Verbindungskanals (221) der Schließnadel (209) mit der radialen Ausmündung (223) des Verbindungskanals (224) im rohrförmigen Einsatz (207) mindestens in der der Schließstellung entsprechenden Axialstellung der Schließnadel (209) durch Relativdrehung um die gemeinsame Längsachse wahlweise in und außer Strömungsverbindung mit der Zuführleitung (224) für das strömungsfähige Medium, insbesondere das Druckgas, stellbar ist.

## Claims

1. Method for the injection-moulding of shaped parts of thermoplastic synthetic materials,
(a) - in which method initially a quantity, which is adequate for the formation of the shaped part, of the molten synthetic material is pressed into the injection-moulding mould (103; 203),
(b) - a fluid medium, in particular gas, is then pressed into the injection-moulding mould (103; 203) and/or the thermoplastic synthetic material at a pressure which distributes the synthetic material mass uniformly over the surface of the mould cavity whilst forming a hollow body and
(c) - the hollow body still kept under medium pressure is cooled down in the injection-moulding mould (103; 203)
(d) - and the medium pressure is finally let out of the hollow body opening the mould as well as taken out of the injection-moulding mould (103; 203),
(e) - wherein the fluid medium is introduced into the injection-moulding mould (103, 203) and/or brought into effect onto the synthetic material mass distributed over the surface of the mould cavity out of a pressure storage device (6) kept at least to a preset minimum pressure,
(f) - wherein the pressure of this fluid medium in the mould cavity is checked and/or varied (10a, 10b, 10c) at least periodically until the cooling-down of the synthetic material mass and independently of the prevailing pressure in the pressure storage device (6),
(g) - but during which is blocked against return flow from the mould cavity (4; 4a to 4c),
(h) - the fluid medium is fed to a flow path or several different, for example three, flow paths (8a, 8b, 8c),
(i) - and in that case is supplied into this or these always at the prevailing pressure in the pressure storage device (6),
(j) - this flow path or a respective one of these flow paths (8a or 8b or 8c) is freed (9a or 9b or 9c) for connection with the injection-moulding mould (103; 203),
(k) - the fluid medium always supplied at the prevailing pressure in the pressure storage device (6) is brought only in the freed flow path or in the respectively freed flow path (8a or 8b or 8c) to a selected pressure stage or a set pressure level (10a or 10b or 10c)
(l) - as well as made effective periodically into the mould cavity of the injection-moulding mould (103; 203) at this pressure stage or this pressure level (10a or 10b or 10c)
(m) - and the medium pressure is in that case regulated (10a, 10b, 10c) and or controlled (9a, 9b, 9c) according to a profile preset for the respective shaped part and/or synthetic material.

2. Method according to claim 1, characterised thereby, that the medium pressure is regulated (10a, 10b, 10c) and/or controlled (9a, 9b, 9c) in dependence on time.

3. Method according to claim 1, characterised thereby, that the medium pressure is regulated (10a, 10b, 10c) and/or controlled (9a, 9b, 9c) in dependence on travel.

4. Method according to claim 1, characterised thereby, that the medium pressure is regulated (10a, 10b, 10c) and/or controlled (9a, 9b, 9c) in dependence on time and travel.

5. Method according to claims 1 to 4, characterised thereby, that the medium pressure is regulated (10a, 10b, 10c) and/or controlled (9a, 9b, 9c) in dependence on temperature, for example by way of the temperature of the synthetic material mass disposed in the mould cavity of the injection-moulding mould (103; 203).

6. Method according to claims 1 to 5, characterised thereby, that the medium pressure is regulated (10a, 10b, 10c) and/or controlled (9a, 9b, 9c) in dependence on the internal pressure in the mould cavity of the injection-moulding mould (103; 203).

7. Method according to claims 1 to 5, characterised thereby, that the medium pressure is regulated (10a, 10b, 10c) and/or controlled (9a, 9b, 9c) to be rising and falling gradually.

8. Method according to one or more of the claims 1 to 7, characterised thereby, that the media pressure is varied suddenly or in steps each time.

9. Device for the injection-moulding of shaped parts of thermoplastics synthetic materials,
- in which device an injection-moulding mould (103; 203) containing the mould cavity for the formation of the shaped part is layable against the injection head (2; 101; 201) or the nozzle mouthpiece (102; 202) at the front end of the housing of a worm extruder (1),
- the mould cavity of this injection-moulding mould (103; 203) is chargeable with synthetic material melt out of the worm extruder (1) through the injection head (2; 101; 201) or the nozzle mouthpiece (102; 202),
- the transfer of the synthetic material melt through the injection head (2; 101; 201) or the nozzle mouthpiece (102; 202) into the injection-moulding mould (103; 203) is influenceable, for example by a closure needle (106; 209), which is resettable in the housing of the worm extruder (1) relative to the nozzle mouthpiece (102; 202) by a displacing drive,
- the mould cavity in the injection-moulding mould (103; 203) is connectible (9a, 9b, 9c; 4) by way of ducts (3, 7) with a pressure storage device (6) for a fluid medium,
- control elements (9a, 9b, 9c) and/or regulating elements (10a, 10b, 10c) for the fluid medium are provided in the ducts leading from the pressure storage device (6) to the injection-moulding mould (103; 203)
- and a return flow barrier (4; 4a, 4b, 4c) for the fluid medium is arranged in these ducts (3, 7) upstream of the mould cavity of the injection-moulding mould (103; 203),
and wherein multiway valves are provided as control elements (9a,9b, 9c), as well as suitable pressure valves are provided as control and/or regulating elements (10a, 10b, 10c) for control and/or regulation of a pressure profile, in the ducts (7, 3 or 7, 3a, 3b, 3c) leading from the pressure storage device (6) to the mould cavity of the injection-moulding mould (103; 203).

10. Device according to claim 9, characterised thereby, that the pressure valves, which are provided as control and/or regulating elements (10a, 10b, 10c), are constructed as pressure limiting valves.

11. Device according to claim 9, characterised thereby, that the pressure valves, which are provided as control and/or regulating elements (10a, 10b, 10c), are designed as pressure-regulating valves.

12. Device according to one of the claims 9 and 11, characterised thereby, that several pressure valves (Figures 1 and 2), which are connected in parallel and settable and drivable (9a, 9b, 9c) one independently of the other, but connectible with the mould cavity of the same injection-moulding mould (103; 203), are provided as control and/or regulating elements (10a, 10b, 10c).

13. Device according to one of the claims 9 to 11, characterised by several groups of pressure valves (10a, 10b, 10c; Figure 3), which are connected in parallel and stand in connection (2a or 2b, 2c) with the mould cavities of different injection-moulding moulds (103; 203), but are settable and drivable (9a, 9b, 9c) one independently of the other.

14. Device according to one of the claims 9 to 13, characterised thereby, that the pressure storage device (6) is connectible to the mould cavity of the injection-moulding mould (103; 203) by way of the injection head (2 or 101 or 201) of the worm extruder (1) or of the injection-moulding machine.

15. Device according to claim 14, characterised thereby,
- that the injection head (101) contains a respective feed channel (112 or 111) each for the synthetic material melt and the fluid medium, which is associated with a main channel (105) passing over into an exit opening (110),
- that the feed channels (112 or 111) open into the main channel (105) at an axial spacing from the exit opening (110) and displaced angularly from as well as against one another,
- that a closure needle (106) is provided, which is axially displaceable in the main channel (105) and by which both the feed channels (112 and 111) are separable from the main channel (105),
- that a connecting channel (117), which extends in substantially axial direction and is led at one end out of the circumference of the closure needle (106) radially out from the end face (118) to the more remote feed channel (111), is arranged in the closure needle (106),
- and that the radial circumferential opening (119) of the connecting channel (117) in the closed axial setting as well as also in at least a partially open axial setting of the closure needle (106) lies at about the same height as the inner radial exit opening of the more remote feed channel (111).

16. Device according to claim 14, characterised thereby,
- that an inner nozzle (13, 14, 15) for a first synthetic material is formed in the injection head (201) at one end by a tubular insert (207), which is guided to be axially displaceable in the housing (204), and in turn contains a likewise axially displaceable needle (209) as closure device,
- that an annular nozzle (210, 211), for which the axially displaceable tubular insert (207) forms the closure device, for the second synthetic material is formed by an annular space (206) between the tubular insert (207) and the housing (204),
- that the closure needle (209) at its free end has a prolongation (218), which in the closed setting of the inner nozzle (13, 14, 15) terminates at least flush with the free end of the tubular insert (207),
- that the closure needle (209) at its free end (219) contains a central nozzle opening (220), which is rearwardly adjoined by a connecting channel (221), which has a radial circumferential opening (222),
- that a longitudinally extending connecting channel (224), which opens out radially at the internal circumference (208) of the tubular insert (207), is formed in the wall of the tubular insert (207),
- and that the radial circumferential opening (222) of the connecting channel (221) of the closure needle (209) with the radial opening (223) of the connecting channel (224) in the tubular insert (207) is settable at least in that axial setting of the closure needle (209), which corresponds to the closed setting, selectably into and out of flow connection with the feed duct (224) for the fluid medium, in particular the pressurised gas, by relative rotation about the common longitudinal axis.

## Revendications

1. Procédé pour le moulage par injection de pièces moulées en matières synthétiques thermoplastiques,
a) dans lequel on presse d'abord dans le moule d'injection (103 ; 203) une quantité suffisante de matière synthétique en fusion pour former la pièce moulée,
b) dans lequel on injecte ensuite dans le moule d'injection (103 ; 203) et/ou dans la matière synthétique thermoplastique un agent fluide, notamment un gaz, sous pression qui répartit la masse de matière synthétique uniformément sur la surface du creux du moule en formant un corps creux,
c) dans lequel on refroidit ensuite le corps creux maintenu sous la pression de l'agent fluide dans le moule d'injection (103 ; 203),
d) et dans lequel on évacue ensuite la pression de l'agent du corps creux (11, 11a, 11b, 11c) et on démoule la pièce moulée et on retire celle-ci du moule d'injection (103 ; 203),
e) l'agent fluide étant introduit dans le moule d'injection (103 ; 203) et/ou agissant sur la matière synthétique répartie sur la surface du creux du moule à partir d'un accumulateur de pression (6) maintenu au moins à une pression minimum prédéterminée,
f) la pression de cet agent fluide pouvant être contrôlée et/ou variée (10a, 10b, 10c), au moins temporairement dans le creux du moule, indépendamment de la pression régnant dans l'accumulateur de pression (6) jusqu'au refroidissement de la masse de matière synthétique,
g) alors que le reflux hors du creux du moule est bloqué (4 ; 4a à 4c),
h) dans lequel l'agent fluide est alimenté par une voie de passage de fluide ou par plusieurs voies de passage de fluide différentes, par exemple trois voies de passage de fluide (8a, 8b, 8c),
i) et l'alimentation dans cette voie ou ces voies a ici toujours lieu à la pression régnant dans l'accumulateur de pression (6) ;
j) on libère (9a ou 9b ou 9c) cette voie de passage de fluide ou chaque fois l'une de ces voies de passage de fluide (8a ou 8b ou 8c) en vue de la liaison (2, 3) avec le moule d'injection (103 ; 203),
k) l'agent fluide toujours alimenté sous la pression régnant dans l'accumulateur de pression 6) est porté, seulement dans la voie de passage libérée ou dans chaque fois l'une des voies de passage libérées (8a ou 8b ou 8c), à un niveau de pression choisi ou réglé (10a ou 10b ou 10c),
l) et on le rend temporairement actif (2, 3, 4) à ce niveau de pression (10a ou 10b ou 10c) dans le creux du moule d'injection (103 ; 203),
m) et en ce qu'on règle (10a, 10b, 10c) et/ou on commande (9a, 9b, 9c) alors la pression de l'agent selon une courbe prédéterminée pour la pièce moulée correspondante et/ou la matière synthétique correspondante.

2. Procédé selon la revendication 1, caractérisé en ce qu'on règle (10a, 10b, 10c) et/ou on commande (9a, 9b, 9c) la pression de l'agent en fonction du temps.

3. Procédé selon la revendication 1, caractérisé en ce qu'on règle (10a, 10b, 10c) et/ou on commande (9a, 9b, 9c) la pression de l'agent en fonction de la distance.

4. Procédé selon la revendication 1, caractérisé en ce qu'on règle (10a, 10b, 10c) et/ou on commande (9a, 9b, 9c) la pression de l'agent en fonction de la distance et du temps.

5. Procédé selon l'une des revendications 1 à 4, caractérisé en ce qu'on règle (10a, 10b, 10c) et/ou on commande (9a, 9b, 9c) la pression de l'agent en fonction de la température, par exemple la température de la masse de matière synthétique qui se trouve dans le creux du moule d'injection (103 ; 203).

6. Procédé selon l'une des revendications 1 à 5, caractérisé en ce qu'on fait varier (10a, 10b, 10c) et/ou on commande (9a, 9b, 9c) la pression de l'agent en fonction de la pression intérieure qui règne dans le creux du moule d'injection (103 ; 203).

7. Procédé selon l'une des revendications 1 à 5, caractérisé en ce qu'on règle (10a, 10b, 10c) et/ou on commande (9a, 9b, 9c) la pression de l'agent de façon progressivement croissante et décroissante.

8. Procédé selon l'une ou plusieurs des revendications 1 à 7, caractérisé en ce qu'on modifie la pression de l'agent chaque fois brusquement ou par étages.

9. Dispositif pour le moulage par injection de pièces moulées en matières synthétiques thermoplastiques,
- dans lequel un moule d'injection (103 ; 203) qui contient le creux de moulage de la pièce moulée est agençable à la tête d'injection (2 ; 101 ; 201) ou au nez d'éjecteur (102 ; 202) à l'extrémité avant du carter d'une extrudeuse à vis (1),
- dans lequel le creux du moule d'injection (103 ; 203) est alimentable en matière synthétique en fusion par la tête d'injection (2 ; 101 ; 201) ou par le nez d'éjecteur (102 ; 202) depuis l'extrudeuse à vis (1),
- dans lequel le transfert de la matière synthétique en fusion au travers de la tête d'injection (2 ; 101 ; 201) ou du nez d'éjecteur (102 ; 202) dans le moule d'injection (103 ; 203) est influençable par exemple par un pointeau d'obturation (106 ; 209) réglable par rapport au nez de l'éjecteur (102 ; 202) dans le carter de l'extrudeuse à vis (1) moyennant un dispositif de positionnement,
- dans lequel le creux du moule d'injection (103, 203) est reliable (9a, 9b, 9c ; 4) par des conduites (3, 7) à l'accumulateur de pression (6) pour un agent fluide,
- dans lequel les conduites qui mènent de l'accumulateur de pression (6) au moule d'injection (103 ; 203) sont équipées d'éléments de commande (9a, 9b, 9c) et/ou d'éléments de réglage (10a, 10b, 10c) pour l'agent fluide,
- et dans lequel un clapet anti-retour (4 ; 4a, 4b, 4c) pour l'agent fluide est agencé dans ces conduites (3, 7) en amont du creux du moule d'injection (103 ; 203),
- et dans lequel des distributeurs sont agencés à titre d'éléments de commande (9a, 9b, 9c), et des soupapes de pression appropriées pour la commande et/ou pour la régulation d'une courbe de pression sont agencées à titre d'éléments de commande et/ou de réglage (10a, 10b, 10c) dans les conduites (7, 3 ou 7, 3a, 3b, 3c) qui mènent de l'accumulateur de pression (6) au creux du moule d'injection (103 ; 203).

10. Dispositif selon la revendication 9, caractérisé en ce que les soupapes de pression servant d'éléments de commande et/ou de réglage (10a, 10b, 10c) consistent en des soupapes de limitation de pression.

11. Dispositif selon la revendication 9, caractérisé en ce que les soupapes de pression servant d'éléments de commande et/ou de réglage (10a, 10b, 10c) consistent en des soupapes de régulation de pression.

12. Dispositif selon l'une des revendications 9 et 11, caractérisé en ce qu'il comporte plusieurs soupapes de pression montées en parallèle (figures 1 et 2) servant d'éléments de commande et/ou de réglage (10a, 10b, 10c), qui sont commandables et réglables (9a, 9b, 9c) indépendamment l'une de l'autre mais qui sont reliables au creux du même moule d'injection (103 ; 203).

13. Dispositif selon l'une des revendications 9 à 11, caractérisé par plusieurs groupes de soupapes de pression montées en parallèle (10a, 10b, 10c ; figure 3) qui sont reliées (2a ou 2b, 2c) aux creux de moules d'injection différents (103 ; 203), mais qui sont réglables et commandables (9a, 9b, 9c) indépendamment les unes des autres.

14. Dispositif selon l'une des revendications 9 à 13, caractérisé en ce que l'accumulateur de pression (6) est reliable au creux du moule d'injection (103 ; 203) par la tête d'injection (2 ou 101 ou 201) de l'extrudeuse à vis (1) ou de la machine de moulage par injection.

15. Dispositif selon la revendication 14, caractérisé :
- en ce que la tête d'injection (101) comporte chaque fois un canal d'alimentation (112 ou 111) pour la matière synthétique en fusion et l'agent fluide, qui est associé à un canal principal (105) qui s'étend dans un orifice d'injection (110),
- en ce que les canaux d'alimentation (112 ou 111) débouchent à distance axiale de l'orifice d'éjection (110) et à distance l'un de l'autre, et de façon décalée l'un par rapport à l'autre dans le canal principal (105),
- en ce qu'un pointeau d'obturation (106) déplaçable axialement dans le canal principal (105) est prévu pour séparer les deux canaux d'alimentation (112 et 111) du canal principal (105),
- en ce que le pointeau d'obturation (106) comporte un canal de liaison (117) essentiellement axial qui mène, en partant de la face frontale (118), radialement vers le canal d'alimentation éloigné (111) en débouchant sur la circonférence du pointeau d'obturation (106),
- en ce que l'ouverture radiale (119) du canal de liaison (117) située sur la circonférence est située approximativement à même hauteur que l'embouchure interne radiale (113) du canal d'alimentation éloigné (111), tant dans la position axiale d'obturation que dans au moins une position axiale partiellement ouverte du pointeau d'obturation (106).

16. Dispositif selon revendication 14 caractérisé
- en ce que la tête d'injection (201) comporte un éjecteur interne (13, 14, 15) formé par un insert tubulaire (207) axialement déplaçable dans le carter (204), qui est destiné à une première matière synthétique et qui comporte à son tour un pointeau déplaçable axialement servant d'obturateur (209),
- en ce que l'espace annulaire (206) entre l'insert tubulaire (207) et le carter (204) constitue un éjecteur annulaire (210, 211) pour la deuxième matière synthétique, pour lequel l'insert tubulaire axialement déplaçable (207) forme l'obturateur,
- en ce que le pointeau d'obturation (209) comporte une extension (218) à son extrémité libre, qui, en position de fermeture de l'éjecteur interne (13, 14, 15), ferme par adaption des formes au moins l'extrémité libre de l'insert tubulaire (207),
- en ce que le pointeau d'obturation (209) comporte, à son extrémité libre (219), un orifice d'éjection central (220) auquel se raccorde, vers l'arrière, un canal de liaison (221) qui présente une embouchure radiale (222) sur la circonférence,
- en ce qu'un canal de liaison longitudinal (224) est formé dans la paroi de l'insert tubulaire (207) pour déboucher (223) sur la circonférence interne (208) de l'insert tubulaire (207),
- et en ce que l'ouverture périférique radiale (222) du canal de liaison (221) du pointeau d'obturation (209) est positionable par rapport à l'embouchure radiale (223) du canal de liaison (224) dans l'insert tubulaire (207), aumoins dans la position axiale correspondant à l'obturation du pointeau d'obturation (209), par rotation relative autour de l'axe longitudinal commun, soit en passage ou en bloquage de l'agent fluide, à savoir le gas sous pression.
